# FASCICULE DE BREVET EUROPEEN

(11) **EP 4 591 390 B1**
(45) Date de publication et mention de la délivrance du brevet: **02.12.2026**
(21) Numéro de dépôt: 23773305.0
(22) Date de dépôt: 21.09.2023
(51) Int. Cl.: H01M 10/613, H01M 10/625, H01M 10/647, H01M 10/653, H01M 10/6557, H01M 10/6567, H01M 50/209, H01M 50/211, H01M 50/593, H01M 50/30

(54) **MODULE ELECTRIQUE COMPRENANT UNE PLURALITE DE CELLULES DE BATTERIES IMMERGEES DANS UN LIQUIDE DIELECTRIQUE**
ELEKTRISCHES MODUL MIT EINER VIELZAHL VON BATTERIEZELLEN, DIE IN EINE DIELEKTRISCHE FLÜSSIGKEIT EINGETAUCHT SIND
ELECTRIC MODULE COMPRISING A PLURALITY OF BATTERY CELLS IMMERSED IN A DIELECTRIC FLUID

(30) Priorité: 22.09.2022 FR 2209600; 20.04.2023 FR 2304004
(43) Date de publication de la demande: 30.07.2025
(73) Titulaire: EXOES, 33170 Gradignan (FR)
(72) Inventeur: WATTS, Stéphane, 33260 LA TESTE DE BUCH (FR); ALBERGUCCI, Frédéric, 33000 BORDEAUX (FR); DACCORD, Rémi, 33170 GRADIGNAN (FR); TOURTEL, Brice, 33700 MERIGNAC (FR); BONNAMY, Paul, 33610 CESTAS (FR)
(74) Mandataire: IP Trust
(86) Numéro de dépôt international: PCT/EP2023/076031
(87) Numéro de publication internationale: WO 2024/062013

(56) Documents cités:
- EP-A1- 3 828 984
- WO-A1-2008/153602
- WO-A1-2022/128823
- WO-A1-2022/129889
- CN-A- 113 875 077
- JP-A- 2009 054 297
- US-A1- 2009 178 792
- US-A1- 2010 047 682
- US-A1- 2012 114 992
- US-B2- 11 075 415
- US-B2- 9 865 907

## Description

### Domaine de l'invention

La présente invention concerne un pack de batterie présentant un système de gestion thermique optimisé dans lequel un liquide à température régulée vient au contact direct des cellules de batteries. Elle s'applique notamment, mais pas exclusivement, dans le domaine de la mobilité. Elle s'applique par exemple aux batteries de traction des véhicules électriques (VE) et des véhicules électriques hybrides (VEH) ainsi qu'aux batteries des avions, aéronefs à décollage vertical, fusées et satellites.

Un module de batteries de cellules électrochimiques de type lithium-ion (Li-ion), subit régulièrement des phases de charge et de décharge, entraînant un échauffement qui peut être important. Cette électrochimie présente également une plage de température de fonctionnement réduite, typiquement entre 0 et 55°C pour la charge et - 20°C et 75°C pour la décharge. Le vieillissement accéléré des cellules augmente lorsque la température des cellules s'écarte d'une température idéale de fonctionnement, typiquement 25°C.

Il est donc nécessaire de la refroidir efficacement afin, d'une part, de maintenir son niveau de performance, et d'autre part de limiter son vieillissement accéléré. La densité de puissance de ces batteries a tendance à augmenter afin de satisfaire aux besoins en termes d'autonomie et de charge rapide. Un refroidissement par liquide, généralement de l'eau glycolée, permet de satisfaire à ces besoins. L'eau circule classiquement dans une ou des plaques, elle-même mise en contact avec les cellules électrochimiques. Le contact entre les cellules et l'eau est donc indirect et local, diminuant d'autant l'efficacité du système. L'eau peut parfois être remplacée par des liquides thermiques diélectriques pour limiter le risque de court-circuit en cas de fuite.

### Etat de la technique

On connaît dans l'état de la technique la demande de brevet JP2009054297 décrivant un bloc de batteries comportant un boîtier de batteries, une batterie de combinaison logée dans le boîtier de batteries et comprenant une pluralité de batteries rechargeables plates et rectangulaires qui sont superposées les unes sur les autres, un corps creux interposé au moins entre les batteries rechargeables plates et rectangulaires dans la batterie de combinaison et réalisé en film de résine ayant un point de fusion compris entre 110 et 200°C, et un agent de refroidissement traversant le cors creux et comportant un solvant isolant non inflammable.

Une solution similaire est décrite dans la demande de brevet WO2022128823 proposant une entretoise pour cellules électrochimiques de batterie, comprenant une structure alvéolaire formée par des parois, les parois présentant des trous permettant à un fluide de traverser les alvéoles de la structure alvéolaire.

On connaît aussi la demande de brevet CN113875077 décrivant une batterie comprenant au moins un rang de cellules (10) de stockage d'énergie, ledit rang présentant une direction d'extension longitudinale, un côté supérieur et des côtés latéraux du rang étant respectivement définis par une succession de faces supérieures et latérales des cellules et d'espaces séparant lesdites cellules le long de ladite direction d'extension longitudinale, ladite batterie comprenant en outre un circuit de fluide diélectrique, ledit circuit comprenant un ou plusieurs orifices d'aspersion desdites cellules, ledit ou lesdits orifices d'aspersion affleurant le côté supérieur (12) du rang et/ ou étant situés en regard de l'un au moins des côtés latéraux dudit rang de sorte à ce que ledit circuit laisse libre le côté supérieur du rang.

Le brevet US11075415 décrit également un ensemble accumulateur pour véhicule hybride ou électrique peut comprendre une pluralité de cellules de batterie ayant respectivement des faces d'appui mutuellement opposées. Les éléments de batterie peuvent être empilés dans une direction d'empilement face à face avec les faces d'appui pour former un bloc de batterie. L'ensemble peut également comprendre un dispositif de refroidissement comprenant une pluralité d'éléments de refroidissement à travers lesquels un écoulement de fluide de refroidissement peut passer. La pluralité d'éléments de refroidissement peuvent être disposés entre des cellules de batterie voisines et renforcés dans la direction d'empilement. Un élément de refroidissement respectif de la pluralité d'éléments de refroidissement peut au moins l'un de i) comprendre et ii) être formé par un insert intermédiaire poreux compressible ayant une pluralité de pores à travers lesquels un écoulement du fluide de refroidissement peut passer. .

La demande de brevet US2009178792 décrit dispositif de refroidissement de type refroidi par liquide comprend un boîtier ayant une entrée de liquide de refroidissement et une sortie de liquide de refroidissement, et un tuyau de sortie relié à la sortie de liquide de refroidissement. Le boîtier comprend une partie de sortie de liquide de refroidissement, et la sortie de liquide de refroidissement est formée dans une paroi supérieure de la partie de sortie de liquide de refroidissement. Le tuyau de sortie a une paroi inférieure parallèle à une partie de la paroi supérieure de la partie de sortie de liquide de refroidissement où la sortie de liquide de refroidissement est formée.

La demande de brevet US 2010/047682 A1 décrit un module de batterie électrique comprenant un boîtier dans lequel sont disposés une pluralité de cellules en échange thermique direct avec un fluide de refroidissement circulant entre des interstices formés entre lesdites cellules adjacentes. Ledit boîtier présente un volume intermédiaire dans lequel lesdites cellules adjacentes sont disposées et entre lesquelles s'écoule ledit fluide, un volume inférieur situé en-dessous dudit volume intermédiaire, et alimenté par au moins un port d'entrée de fluide, un volume supérieur, situé au-dessus dudit volume intermédiaire, et débouchant vers l'extérieur dudit boîtier par au moins un port de sortie de fluide.

### Inconvénient de l'art antérieur

Les solutions de l'art antérieur présentent l'inconvénient d'un circuit de circulation du liquide de refroidissement relativement long, surtout lorsque la batterie comporte un grand nombre de cellules et la circulation forcée entre les cellules présentent des variations importantes entre celles qui sont les plus proches des entrées de liquide de refroidissement, et celles qui en sont les plus éloignées. La maîtrise thermique des cellules est alors très inhomogènes, certaines étant plus refroidies que d'autres, conduisant à des températures de fonctionnement différentes et des caractéristiques électriques, dépendantes en partie de la température de la cellule, hétérogènes. Il en résulte des anomalies de fonctionnement électriques des cellules reliées en série ou en parallèles, directement ou via un module de management électrique.

### Solution apportée par l'invention

Les solutions mises en œuvre dans l'invention consistent à faire circuler le liquide de refroidissement de bas en haut ce qui permet à la fois la purge automatique de l'air par le port de sortie et la vidange possible de liquide par le port d'entrée. De plus, des restrictions de sections sont créés pour uniformiser la distribution de liquide afin de servir toutes les cellules avec un liquide sensiblement à la même température et au même débit ce qui permet des performances et un vieillissement homogène de la batterie. Enfin ces restrictions de section sont pratiquées uniquement sur le bas des cellules, ce qui favorise la circulation naturelle, en particulier lors d'un emballement thermique d'une cellule. Cette circulation naturelle vient s'ajouter voire suppléer au débit imposé par la pompe pour éviter la propagation d'un emballement thermique. Dans le cas de cellules prismatiques, ces restrictions sont portées par des entretoises venant s'insérer entre les cellules. Ces entretoises disposent en sus de moyens de répartir l'effort de compression pour maitriser les contraintes mécaniques internes aux cellules pour éviter de les faire vieillir prématurément.

Les solutions mises en œuvre dans l'invention consistent également à inclure l'ensemble des composants périphériques aux cellules de batteries à l'intérieur de l'enceinte étanche, en les immergeant dans un liquide diélectrique. Ainsi, les circuits électroniques, les contacteurs, les fusibles, les capteurs de courant et de tension, les résistances de précharge, les bus-barres et les connecteurs sont refroidis. De plus, le nombre d'interfaces avec l'extérieur de l'enceinte est considérablement réduit ce qui facilite la mise en œuvre de l'étanchéité de l'enceinte.

De plus, pour réduire l'encombrement et le poids, la solution proposée consiste à intégrer le vase d'expansion dans d'autres composants, telle la boite jonction, composant qui contient toute ou partie des sécurités électriques de la batterie : fusible, contacteurs, résistance de pré-charge, capteur de courant, carte d'isolation, carte de supervision des tensions, températures et courant de la batterie. Alternativement, l'enceinte étanche appliquée à chacun des modules est étendue à la totalité de la batterie ce qui permet de soulager les modules de cette fonction : ils sont alors plus compacts et légers. L'enceinte prend alors également la fonction du vase d'expansion.

### Objet de l'invention

La présente invention concerne un selon son acception la plus générale un module de batterie électrique présentant les caractéristiques techniques énoncées par la revendication 1.

Il comprend un boîtier dans lequel sont disposées une pluralité de cellules en échange thermique direct avec un liquide de refroidissement diélectrique circulant entre des interstices formés entre lesdites cellules adjacentes, caractérisé en ce que ledit boîtier présente :
- un volume intermédiaire dans lequel lesdites cellules adjacentes sont disposées et entre lesquels s'écoule ledit liquide diélectrique,
- un volume inférieur situé en-dessous dudit volume intermédiaire, et alimenté par au moins un port d'entrée de liquide diélectrique,
- un volume supérieur, situé au-dessus dudit volume intermédiaire, et débouchant vers l'extérieur dudit boîtier par au moins un port de sortie de liquide diélectrique,
- et en ce qu'un dispositif de pertes de charge soit disposé entre ledit volume inférieur et ledit volume intermédiaire, ledit dispositif de pertes de charge étant configuré pour moduler localement la résistance d'écoulement entre la ou les zones les plus proches dudit au moins un port d'entrée (3) de liquide diélectrique, et la ou les zones opposées dudit volume inférieur.

Le port de sortie est desservi par un baquet. Un conduit hydraulique en forme de baquet permet de collecter le liquide à proximité de la face interne supérieure de l'enceinte pour le guider vers le port de sortie de manière à collecter les bulles de gaz et limiter la hauteur d'un éventuel ciel gazeux dans le module.

Alternativement ou additionnellement, un second baquet
communique avec une soupape pour évacuer les gaz issus de la dégradation de l'électrolyte en cas d'emballement thermique d'une des cellules.

Optionnellement, un baquet unique rempli ces deux fonctions.

De préférence, la perte de charge entre ledit volume intermédiaire et ledit volume supérieur est sensiblement plus faible qu'entre ledit volume inférieur et ledit volume intermédiaire de sorte à favoriser la convection naturelle en cas d'absence d'alimentation de liquide diélectrique par ledit au moins un port d'entrée.

De préférence, ledit dispositif de pertes de charge est constitué d'orifices entre 0.3mm² et 2.3mm² de section chacun.

Selon une première variante, lesdites cellules sont de type prismatique ou en sachet, et sont disposées verticalement dans ledit volume intermédiaire.

De préférence, des entretoises sont intercalées entre deux cellules adjacentes.

Avantageusement, lesdites entretoises forment un treillis de reprise de l'effort de compression appliqué à l'ensemble de cellules sur les grandes faces de celles-ci.

De préférence, lesdites entretoises présentent une souplesse dans leur épaisseur supérieure à 1 mm par MPa.

De préférence, lesdites entretoises possèdent des mailles inférieures à 30% de la longueur desdites cellules.

Selon un mode de réalisation particulier, lesdites entretoises :
- sont formées par un cadre isolant électrique découpé d'une épaisseur comprise entre 7 et 15% de l'épaisseur des cellules,
- présentent des fentes inférieures permettant une perte de charge,
- présentent des fentes supérieures sensiblement plus larges que lesdites fentes inférieures,
- présentent des renforts configurés pour éviter le contact thermique direct entre cellules,
- sont fabriquées en matériau compressible présentant une souplesse supérieure à 1mm par MPa,
- et présentent une fenêtre de circulation du liquide depuis un volume inférieur jusqu'à un volume supérieur.

Avantageusement, lesdites entretoises sont des grilles obtenues par pliage-découpe selon un motif à créneaux décalés, d'une tôle métallique d'épaisseur inférieure à 0,2mm.

Selon une autre variante, lesdites entretoises :
- sont formées par une grille d'une épaisseur comprise entre 7 et 15% de l'épaisseur des cellules,
- présentent une surface de contact avec les cellules supérieure à 30% de la surface de la grande face desdites cellules,
- permettent la circulation du liquide depuis un volume inférieur jusqu'à un volume supérieur.

De préférence, lesdites entretoises :
- présentent une surface de contact avec les cellules supérieure à 50% de la surface de la grande face desdites cellules,
- comportent un motif de pliage 'en queue d'aronde' conférant à la grille une compressibilité permettant de se conformer au gonflement desdites cellules,
- sont formées à partir d'une tôle en acier inoxydable d'épaisseur inférieure à 0.1mm.

Avantageusement, lesdites cellules sont de forme cylindrique et sont disposées verticalement dans ledit volume intermédiaire.

Selon un mode de réalisation particulier, ledit dispositif de pertes de charge est constitué d'orifices répartis en périphérie de chacune desdites cellules cylindriques, dans chacune des deux coques du support de cellules et représente entre 1mm² et 12mm² autour de chacune desdites cellules cylindriques.

Selon une autre variante, un conduit hydraulique en forme de baquet collecte le liquide diélectrique du volume supérieur à proximité de la face interne supérieure de l'enceinte pour le guider vers le port de sortie.

De préférence ce conduit hydraulique présente la forme de baquet pour collecter ledit liquide diélectrique dudit volume supérieur à proximité de la face interne supérieure de l'enceinte pour le guider vers ledit port de sortie, de sorte à définir un niveau de liquide diélectrique dans le volume supérieur le plus élevé possible dans le module lorsque ladite soupape est ouverte.

Avantageusement, un conduit en forme de baquet collecte les gaz émis en cas d'emballement thermique dans le volume supérieur à proximité de la face interne supérieure de l'enceinte pour les guider vers la soupape de sécurité, de sorte à définir un niveau de liquide diélectrique dans le volume supérieur le plus élevé possible dans le module lorsque ladite soupape est ouverte.

L'invention concerne aussi une batterie électrique caractérisée en ce qu'elle comprend une pluralité de modules de batterie présentant les caractéristiques du module susvisé et en ce qu'ils sont étanches, lesdits modules présentant chacun une soupape de sécurité connecté à un tube creux du châssis de sorte que les gaz émis lors d'un emballement thermique soient dirigés à l'intérieur dudit châssis et expulsés hors de ladite batterie sans se propager dans celle-ci.

### Description détaillée d'un exemple non limitatif de l'invention

La présente invention sera mieux comprise à la lecture de la description détaillée d'un exemple non limitatif de l'invention qui suit, se référant aux dessins annexés où :
- [Fig.1] La [Fig.1] représente une vue schématique de la circulation du liquide dans un module de batterie refroidi par immersion
- [Fig.2] La [Fig.2] représente un schéma de l'état de l'art d'une batterie modulaire refroidie par immersion
- [Fig.3] La [Fig.3] représente un schéma d'une batterie modulaire refroidie par immersion avec une boite de jonction immergée faisant office de vase d'expansion
- [Fig.4] La [Fig.4] représente un schéma d'une batterie mono-structurelle refroidie par immersion
- [Fig.5]

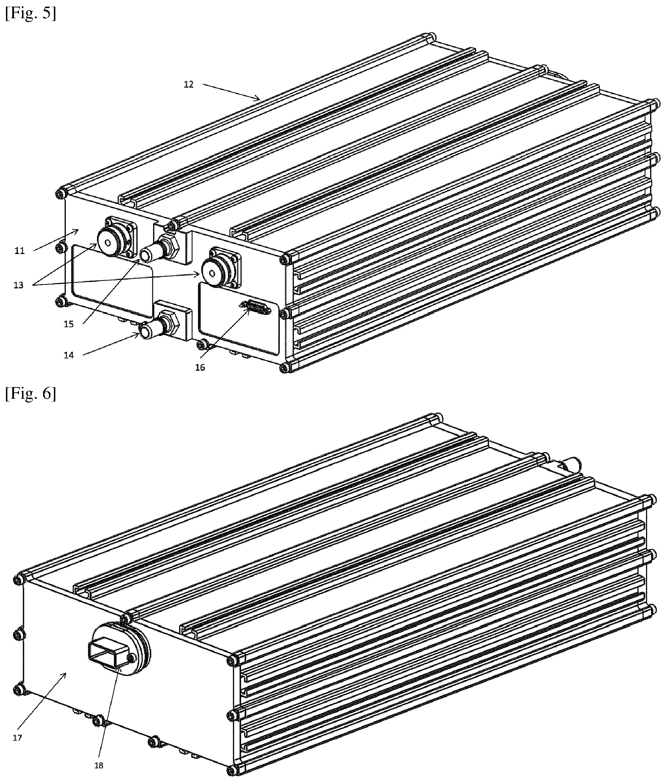

- [Fig.6] Les figures 5 et 6 représentent un module (10) de batterie à cellules prismatiques

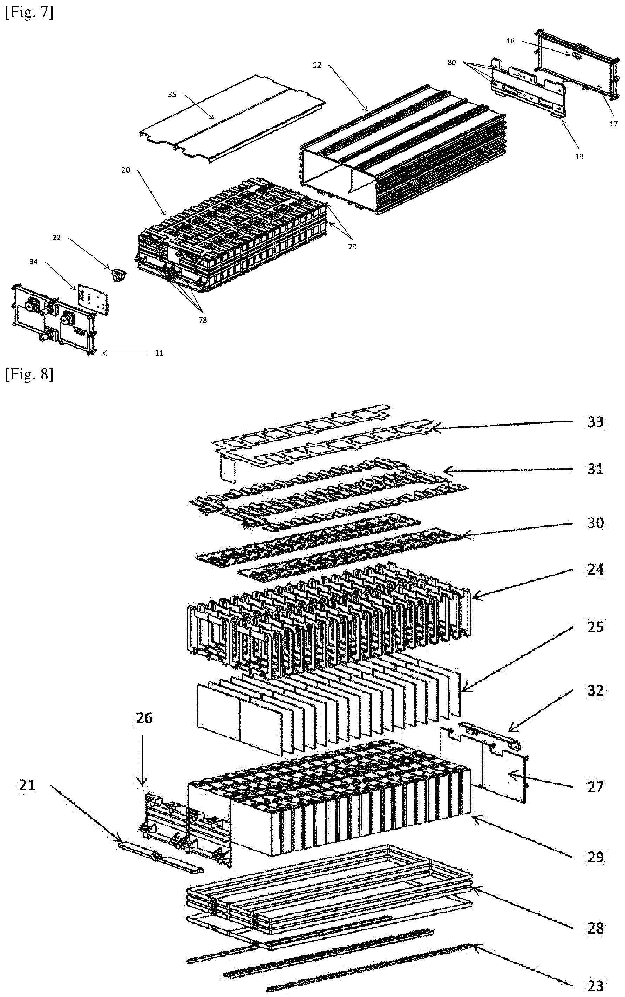

- [Fig.7] La [Fig.7] représente une vue éclatée du module (10) de batterie à cellules prismatiques
- [Fig.8] La [Fig.8] représente une vue éclatée de l'assemblage (20) de cellules prismatiques

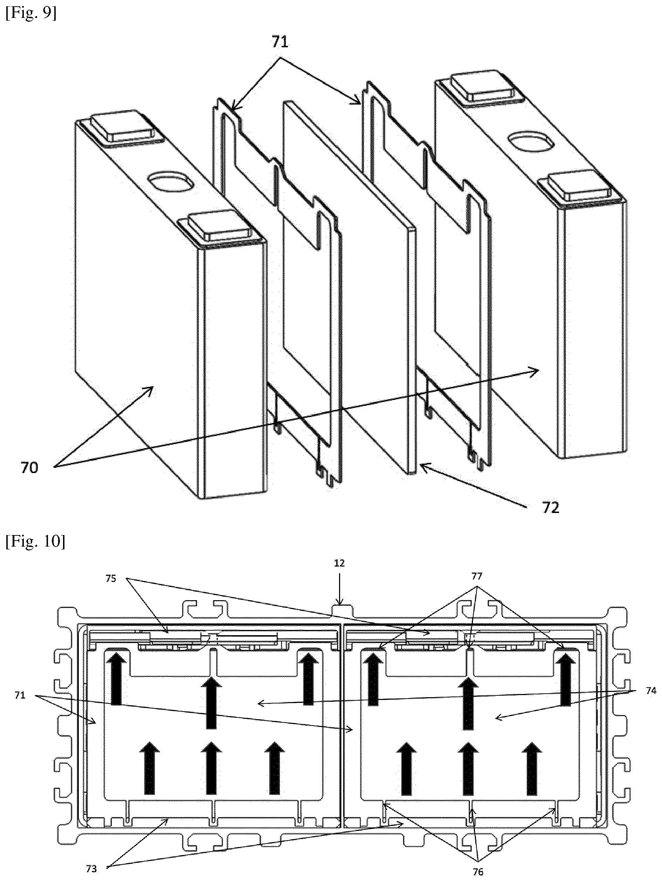

- [Fig.9] La [Fig.9] représente un détail de l'assemblage (20) de cellules prismatiques représentant l'inter-cellule
- [Fig.10] La [Fig.10] représente l'écoulement du liquide dans le module (10) à cellules prismatiques

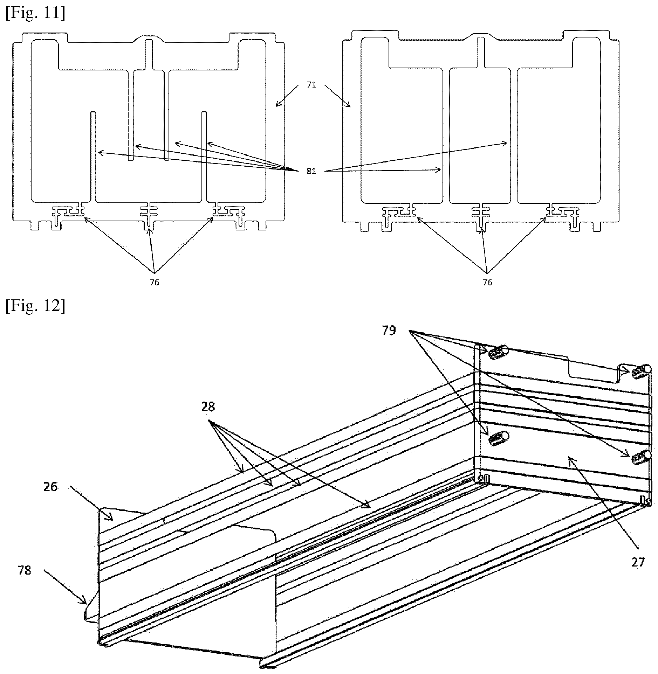

- [Fig.11] La [Fig.11] représente des variantes d'entretoise (71)
- [Fig.12] La [Fig.12] représente le système de fixation mécanique de l'assemblage (20) de cellules prismatiques
- [Fig.13]

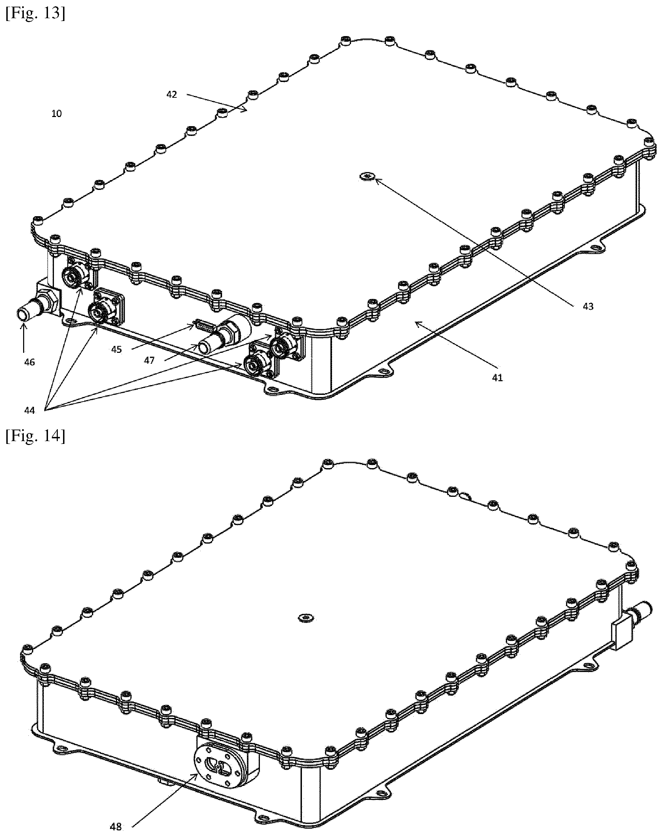

- [Fig.14] Les figures 13 et 14 représentent un module (10) de batterie à cellules cylindriques

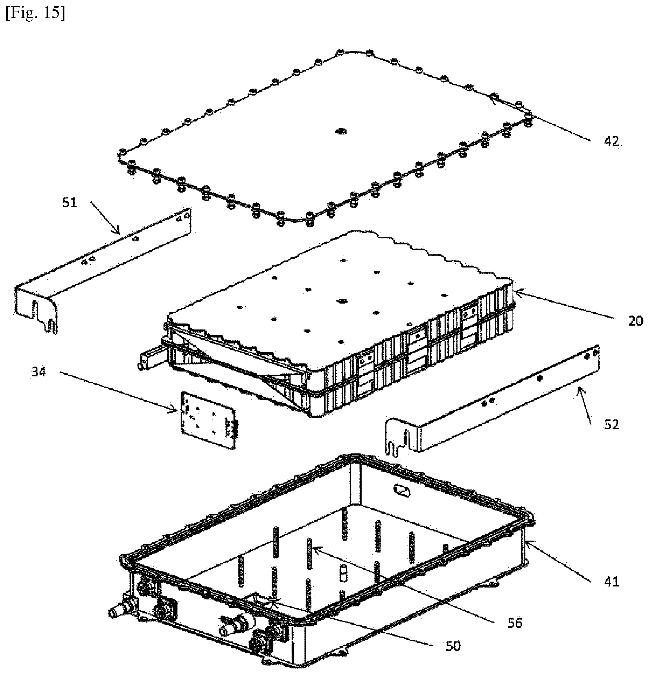

- [Fig.15] La [Fig.15] représente une vue éclatée du module (10) de batterie à cellules cylindriques

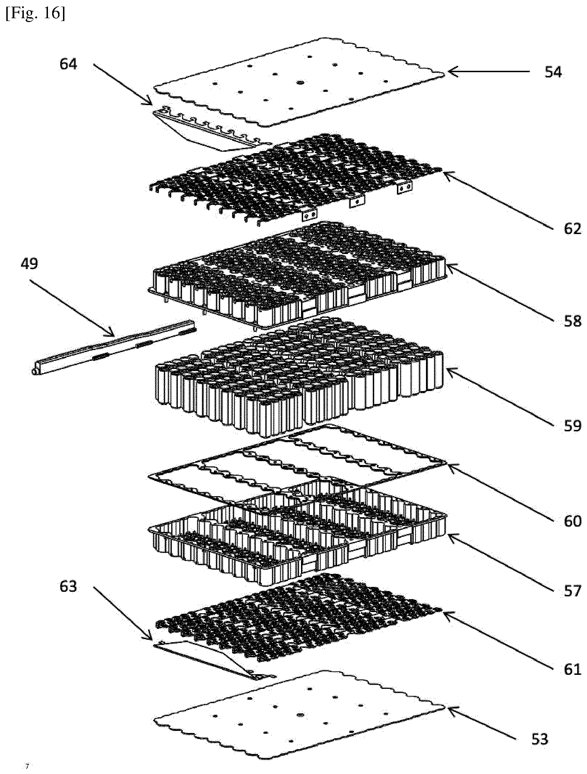

- [Fig.16] La [Fig.16] représente une vue éclatée de l'assemblage (20) de cellules cylindriques

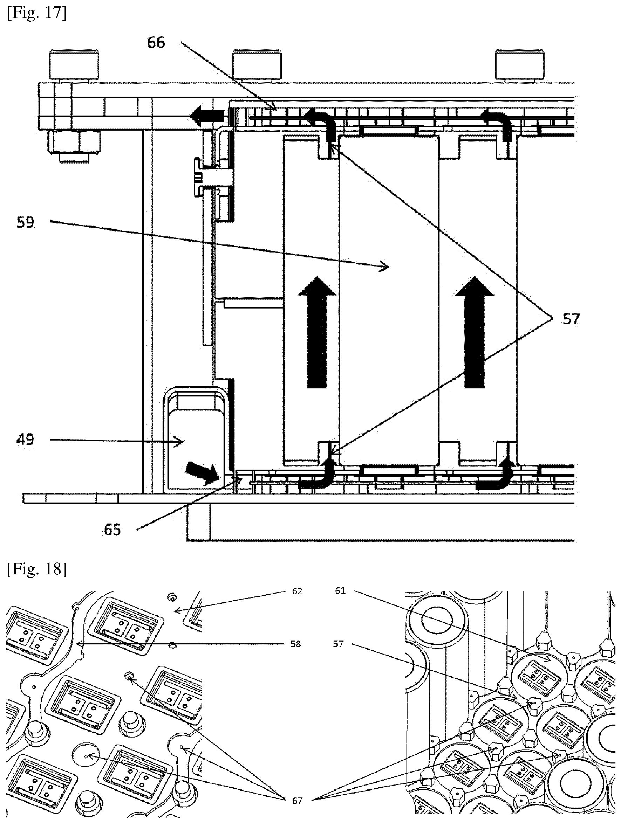

- [Fig.17] La [Fig.17] représente l'écoulement du liquide dans le module (10) à cellules cylindriques
- [Fig.18] La [Fig.18] représente un détail de l'assemblage (20) de cellules cylindriques

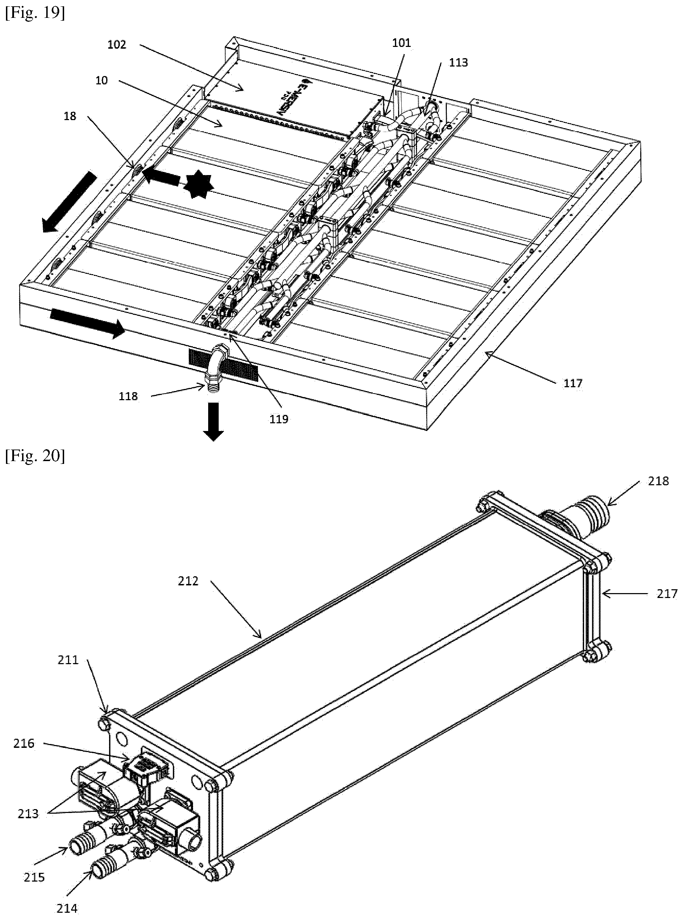

- [Fig.19] La [Fig.19] représente une batterie modulaire refroidie par immersion
- [Fig.20] La [Fig.20] représente un module de batterie à cellules en sachet

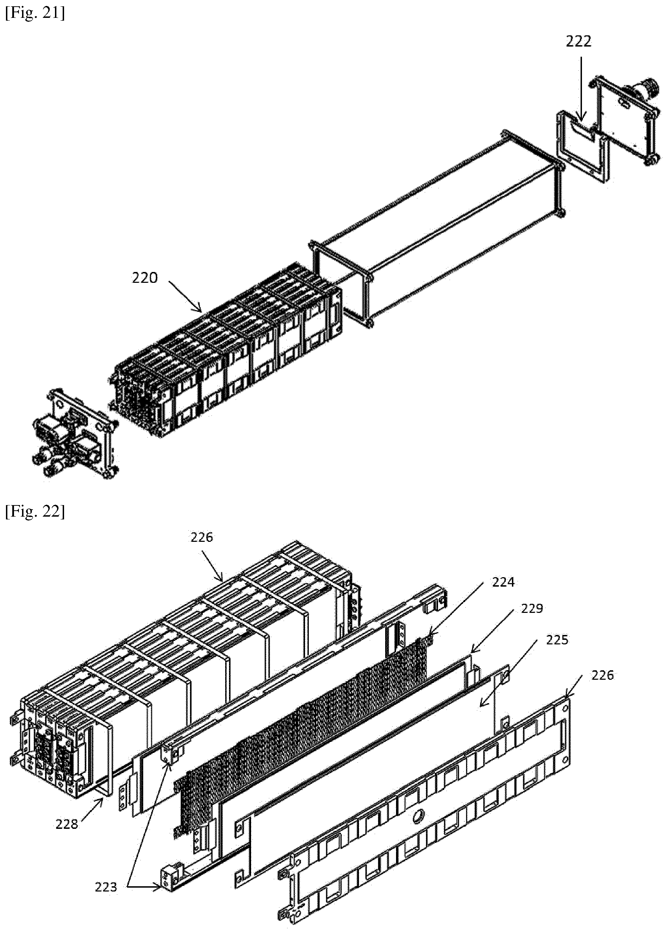

- [Fig.21] La [Fig.21] représente une vue éclatée du module de batterie à cellules en sachet
- [Fig.22] La [Fig.22] représente une vue éclatée de l'assemblage de cellules en sachet

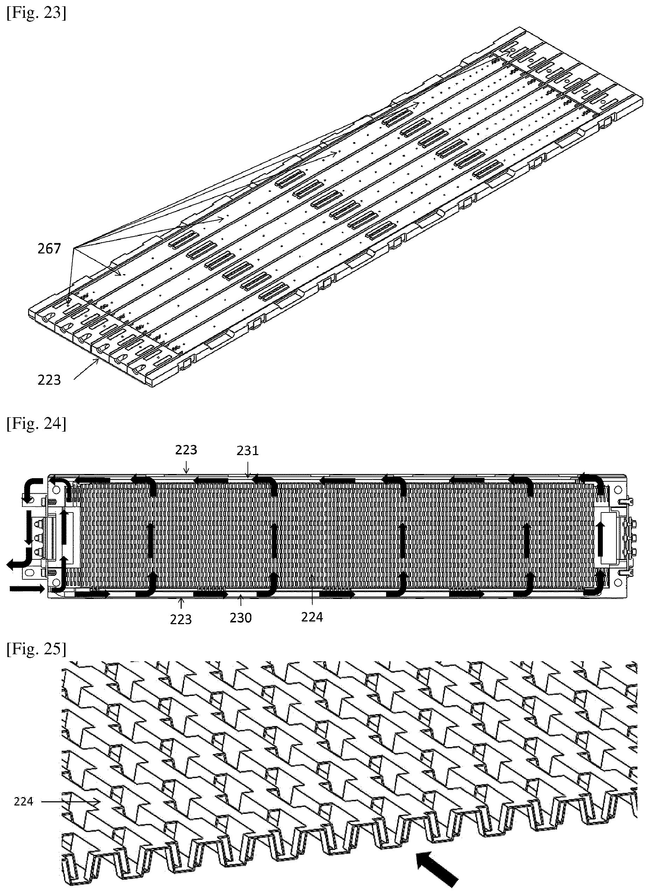

- [Fig.23] La [Fig.23] représente une réalisation possible du dispositif de perte de charges
- [Fig.24] La [Fig.24] représente l'écoulement du liquide dans le module à cellules en sachet
- [Fig.25] La [Fig.25] représente une réalisation possible d'entretoise

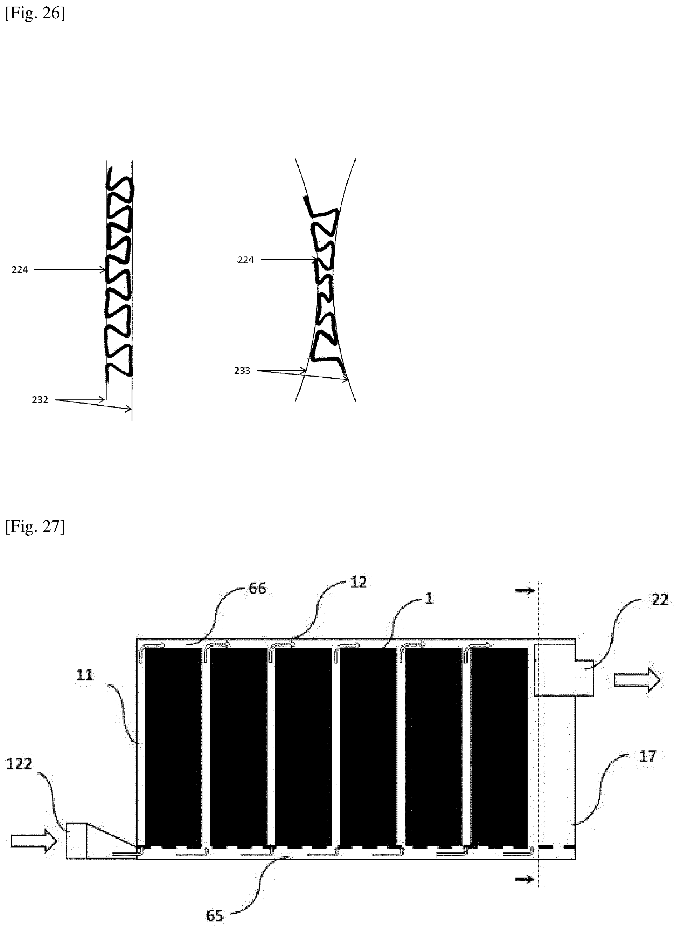

- [Fig.26] La [Fig.26] représente deux vues en coupe du module à cellules en sachet
- [Fig.27] La [Fig.27] représente une vue de côté du module selon l'invention

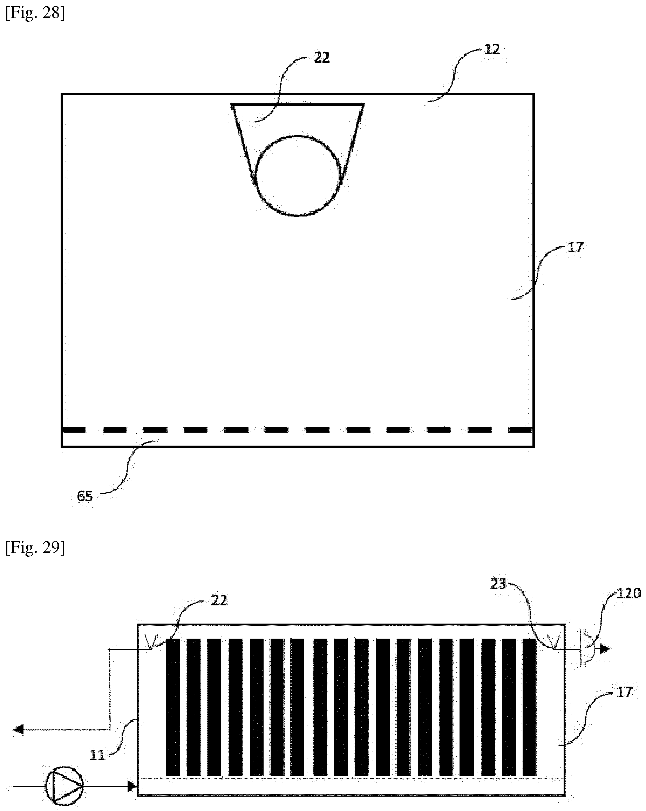

- [Fig.28] La [Fig.28] représente une vue de face du module selon l'invention
- [Fig.29] La [Fig.29] représente une vue de face du module selon l'invention avec deux baquets et une soupape

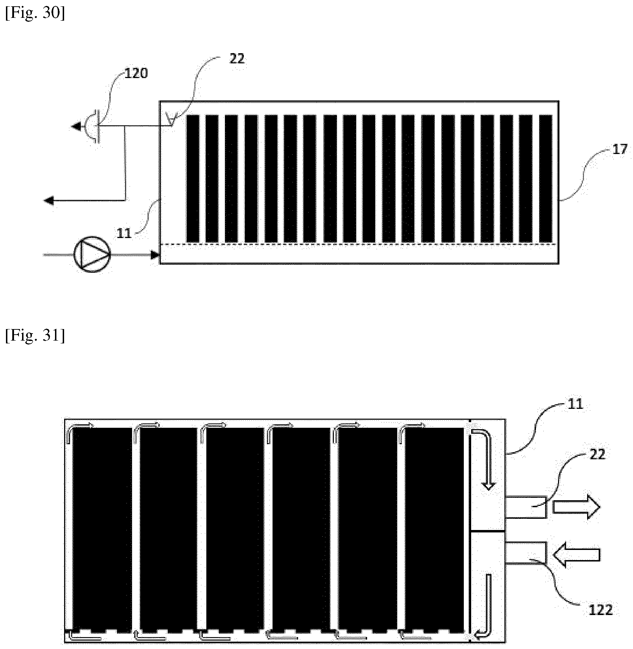

- [Fig.30] La [Fig.30] représente une vue de face du module selon l'invention avec un baquet à double fonction
- [Fig.31] La [Fig.31] représente une vue de face du module selon l'invention avecun baquet situé au-dessus du conduit d'alimentation

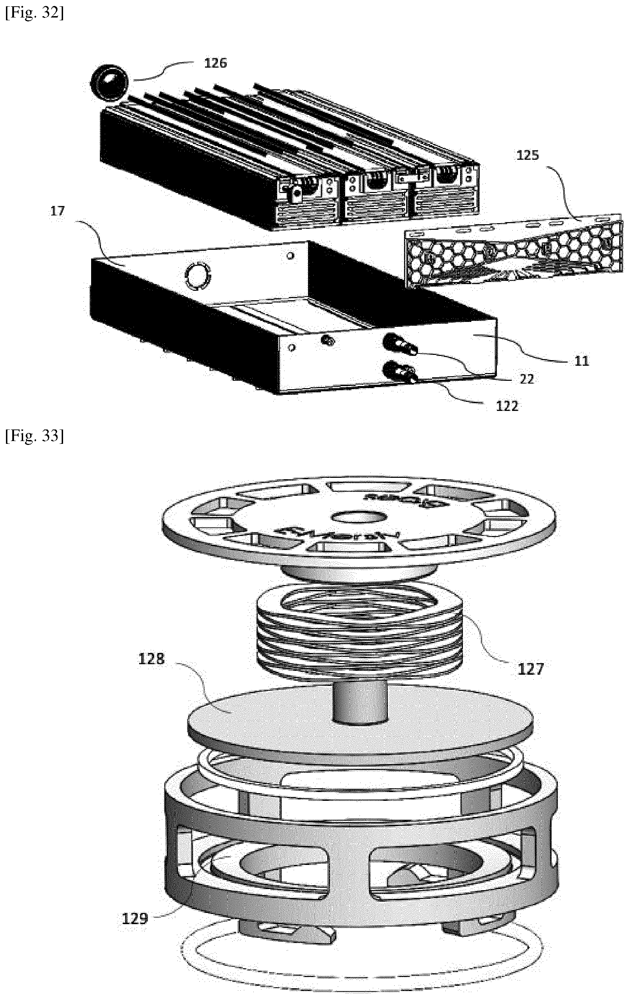

- [Fig.32] La [Fig.32] représente une vue éclaté du module selon l'invention avec un baquet situé au-dessus du conduit d'alimentation
- [Fig.33] La [Fig.33] représente une vue éclatée en détail de la soupape du module selon l'invention

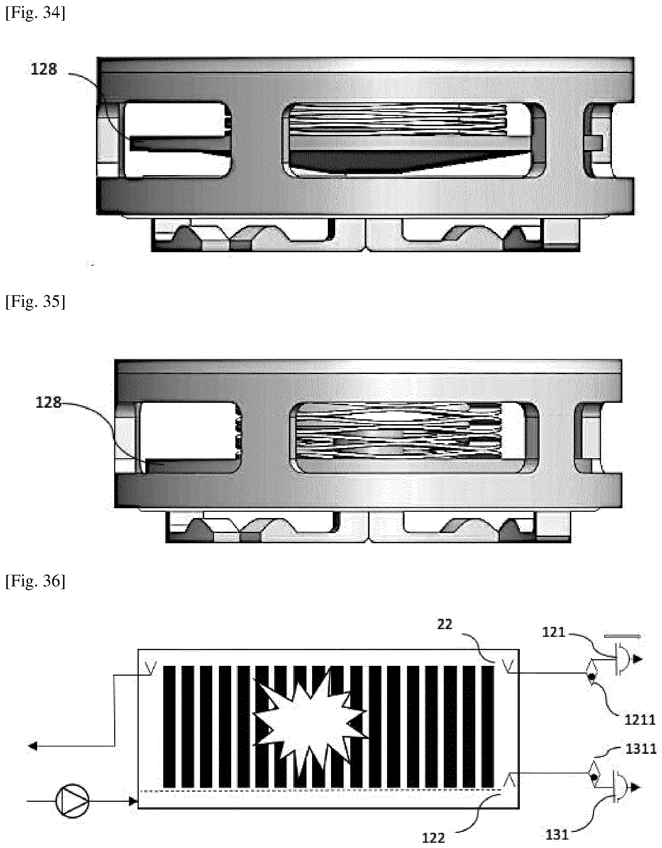

- [Fig.34] La [Fig.34] représente une vue de face de la soupape en position passante
- [Fig.35] La [Fig.35] représente une vue de face de la soupape en position bloquante
- [Fig.36] La [Fig.36] représente une vue schématique du module avec trois baquets et deux soupapes

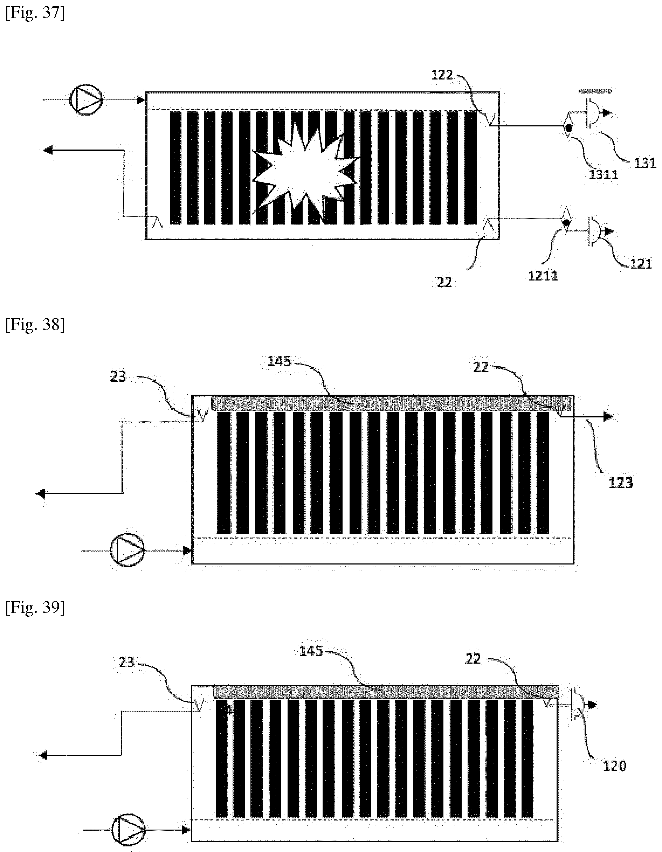

- [Fig.37] La [Fig.37] représente une vue schématique du module avec trois baquets et deux soupapes en position de retournement du module
- [Fig.38] La [Fig.38] représente une vue schématique du module avec deux baquets et une mousse fusible
- [Fig.39] La [Fig.39] représente une vue schématique du module avec deux baquets et une mousse fusible et une soupape.

### Architecture générale et principe de fonctionnement

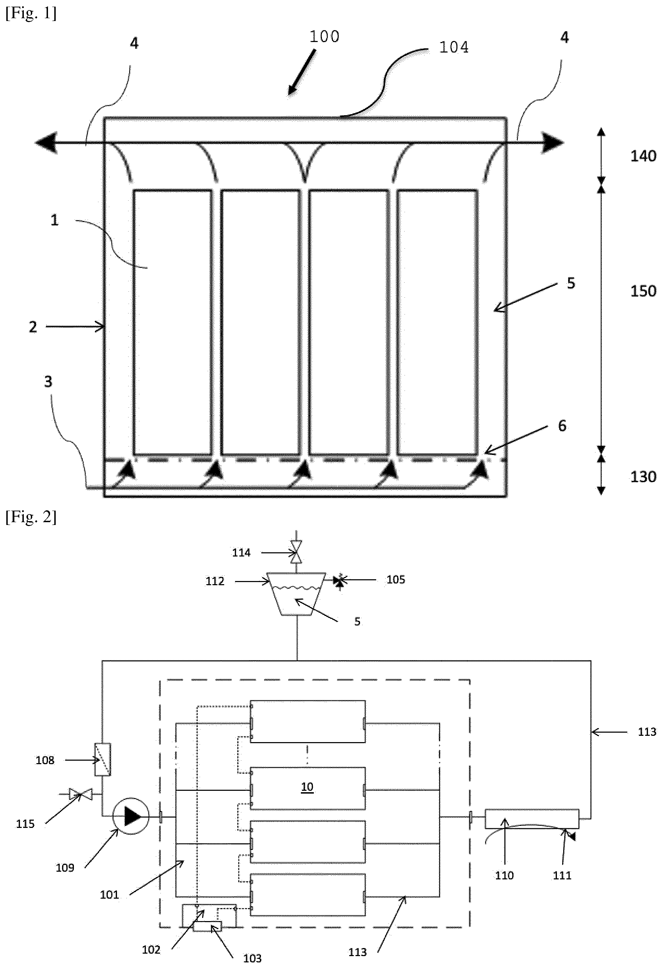

Le module (10) décrit en [Fig.1] est constitué d'une enceinte (2) à l'intérieur de laquelle sont disposées des cellules de batteries (1). Le module (10) dispose de ports d'entrée (3) et de sortie hydrauliques (4) permettant la circulation d'un liquide diélectrique caloporteur (5). Le liquide (5) vient au contact direct des pièces sous tension, selon le principe de refroidissement par immersion.

En fonctionnement, les cellules (1) de batteries chauffent par effet Joule. En effet, soumises à un courant, leur résistance interne notamment produit de la chaleur, dont la puissance est égale à la résistance interne multipliée par l'intensité au carré. De ce fait, le liquide (5) à l'intérieur du module (10) s'échauffe en refroidissant les cellules (1). Puis il transporte cette chaleur hors du module (10). Le liquide (5) s'échappe du module (10) par les ports de sortie (4).

Le module est divisé en plusieurs volumes internes :
- un volume intermédiaire (150) dans lequel des cellules de batteries (1) sont disposées verticalement et entre lesquelles s'écoule le liquide (5),
- un volume inférieur (130) situé en-dessous du volume intermédiaire (150), et alimenté par au moins un port d'entrée (3) de liquide (5),
- un volume supérieur (140), situé au-dessus du volume intermédiaire (150), et débouchant vers l'extérieur du boîtier par au moins un port de sortie (4) de liquide (5).

Le liquide est distribué sous l'assemblage de cellules (1) dans le volume inférieur (130) puis passe au travers d'un dispositif (6) créant une perte de charge sensiblement supérieure aux autres pertes de charge subies par le liquide lors de la traversée du module (10). Ce dispositif de perte de charge (6) permet une distribution sensiblement égale du liquide sur la totalité des cellules (1) du module (10).

Ce dispositif de perte de charge (6) peut être une paroi perforée ou être composé d'un assemblage de pièces sensiblement étanches entre elles et présentant des orifices, ou des fentes, calibrés, laissant passer le liquide de refroidissement, en créant localement, une dissipation, par frottements, de l'énergie mécanique du liquide de refroidissement traversant le dispositif, et une baisse de pression variant en fonction de la distance par rapport au port d'entrée (3) du liquide de refroidissement.

Il en résulte une meilleure uniformité de température des cellules (1) ce qui induit un comportement électrique homogène et un vieillissement homogène des cellules (1). De plus, cette disposition permet une meilleure circulation naturelle du liquide, par thermosiphon, en cas de défaillance de la pompe en opération normale et en cas d'emballement thermique d'une cellule (1). Cette circulation naturelle permet alors d'éviter la propagation de l'emballement thermique aux cellules adjacentes en répartissant de manière efficace la chaleur issue de la combustion de la cellule défaillante sur la totalité de la masse du module (10). Ainsi, la ou les cellules adjacentes reçoivent moins de chaleur et ne dépassent pas la température limite au-dessus de laquelle un emballement thermique est initié.

Le liquide diélectrique (5) présente les caractéristiques suivantes :
- Viscosité cinématique à 40°C préférentiellement inférieure à 30 mm²/s et idéalement inférieure à 5mm²/s
- Point éclair supérieur à 93.5°C, idéalement supérieur à 130°C
- tension de claquage préférentiellement supérieure à 1 kV/mm en phase liquide et gazeuse,
- résistivité électrique à 40°C préférentiellement supérieure à 0.2 GOhm.m
- Capacité calorifique volumique préférentiellement supérieure à 1.5 MJ/m3/K,
- Conductivité thermique liquide préférentiellement supérieure à 0.125 W/m/K
- Viscosité cinématique à -20°C préférentiellement inférieure à 200 mm²/s
- Pression de saturation à 70°C préférentiellement inférieure à 1.5 barA
- Gradient de masse volumique entre 20°C et 200°C préférentiellement supérieur à 0.65 kg/m3/K

Voici un exemple non limitatif du liquide utilisé : une huile diélectrique formulée ou non, dont l'huile de base peut être de type PAO (polyalphaoléfine) ou de type ester.

La performance d'un système de refroidissement dépend du produit du coefficient d'échange thermique, propre au liquide et à l'architecture utilisés, par la surface refroidie. Les différents systèmes de refroidissement par immersion présentés dans ce brevet privilégient la quantité de surface refroidie pour augmenter la performance de refroidissement. Cela permet de travailler avec des liquides plus simples à mettre en œuvre et moins onéreux, et de refroidir les points chauds de la batterie. Les surfaces refroidies varient entre 20 et 98% de la surface des cellules (1) et les coefficients d'échange obtenus varient entre 100 et 300 W/m²/K.

### Description détaillée d'une batterie (100) modulaire en immersion selon l'état de l'art

La [Fig.2] illustre un schéma possible d'une batterie modulaire refroidie par immersion. La batterie (100) est découpée en modules (10) dans lesquels circulent un liquide (5). Ces modules (10) sont étanches au liquide (5). Ils possèdent des ports d'entrée et de sortie hydrauliques.

Les modules (10) sont raccordés entre eux électriquement, par exemple en série, par une bus-barre (101). Cette bus-barre traverse une boite de jonction (102) qui contient des éléments de pilotage et de protection électrique (fusibles, contacteurs, relais et résistance de précharge, capteur de courant et de tension, carte électronique de mesure d'isolement, carte électronique de gestion de la batterie) avant de rejoindre un connecteur (103) de la batterie (100). D'autres câbles non représentés sur la figure, tels des faisceaux électriques de communication circulent également de module à module jusqu'à la boite de jonction.

Le liquide (5) est distribué entre chacun des modules (10), par exemple en parallèle, par une tuyauterie (113). Une pompe (109) crée une pression permettant de pousser le liquide à travers les modules.

Le circuit hydraulique est doté d'un ou plusieurs filtres (108) dessiccants et particulaires qui peuvent être placés avant la pompe ou avant la batterie pour les protéger.

Le circuit hydraulique comprend un échangeur (110) qui permet le refroidissement ou le réchauffage du liquide (5). Cet échangeur transfère la chaleur sur un fluide (111) pouvant être de l'air, de l'eau glycolée, un fluide réfrigérant, voire un fluide cryogénique pour les applications spatiales, ou bien un mélange de ces différents fluides en différents circuits. Cet échangeur (110) peut être placé à différents endroits sur le circuit : après la pompe et avant les modules (10) de préférence afin de réduire la pression hydraulique dans les modules (10).

Le circuit hydraulique contient également un vase d'expansion (112). Ce vase permet la dilation thermique du liquide car il comporte soit un fluide gazeux soit une membrane déformable.

Le circuit hydraulique comprend aussi une soupape de sécurité (105) permettant d'éviter la montée en pression du circuit en cas de défaillance : émission de gaz par les cellules, bouchage du circuit, ...

Cette ou ces soupapes peuvent être placées à différents endroits, sur le vase (112), sur les modules (10) ou sur les tuyauteries (113) contenant le liquide (5).

Un dispositif de remplissage (114) et un dispositif de purge (115) complètent ce circuit hydraulique.

### Description détaillée d'une boite de jonction faisant office de vase d'expansion

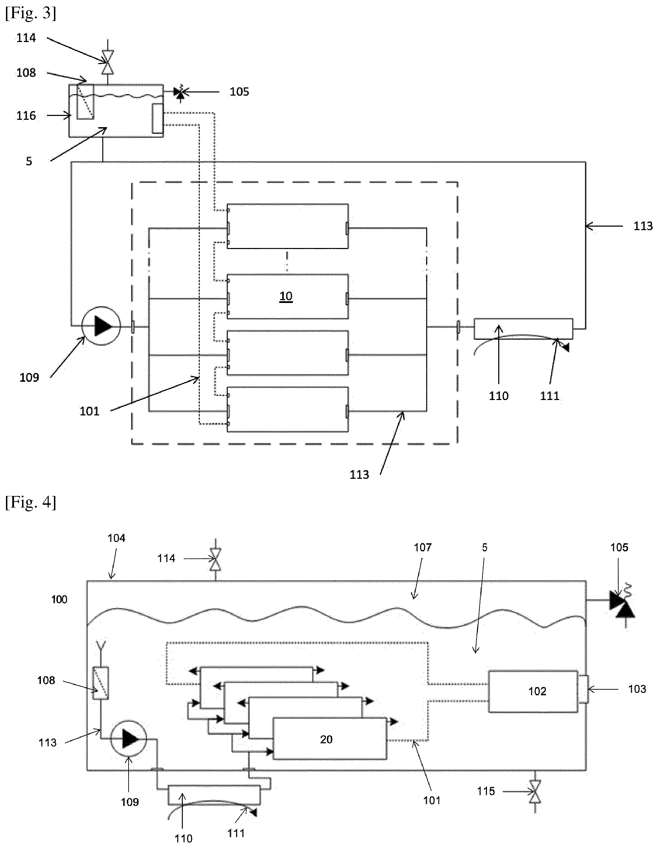

Afin de réduire l'encombrement des batteries, il est intéressant de mutualiser des fonctions sur des organes. Ainsi, afin de refroidir la boite de jonction (102), il peut être pertinent de la refroidir par immersion à l'instar des modules (10). Pour plus de compacité, la [Fig.3] montre un composant (116) qui fusionne la boite de jonction (102) et le vase d'expansion (112). Ce nouveau composant (116) porte en outre une soupape de sécurité (105), un filtre dessiccant (108), ainsi qu'un dispositif de remplissage (114).

### Description détaillée d'une batterie mono structurelle refroidie par immersion

La [Fig.4] illustre une batterie (100) mono structurelle refroidie par immersion afin de réduire encore plus le poids et l'encombrement. Cette batterie (100) est contenue dans une seule enceinte étanche (104). La batterie est divisée en assemblages de cellules (20) qui ne sont pas étanches, par opposition aux modules (10).

Les assemblages de cellules (20) sont raccordés entre eux électriquement, par exemple en série, par une bus-barre (101). Cette bus-barre traverse une boite de jonction (102) qui contient des éléments de pilotage et de protection électrique (fusibles, contacteurs, relais et résistance de précharge, capteur de courant et de tension, carte électronique de mesure d'isolement, carte électronique de gestion de la batterie) avant de rejoindre un connecteur (103) de la batterie (100). D'autres câbles non représentés sur la figure, tels des faisceaux électriques de communication circulent également d'assemblage de cellules à assemblage de cellules jusqu'à la boite de jonction. Le connecteur (103) est étanche au liquide (5) contenu dans l'enceinte (104). La boite de jonction (102) est immergée dans le liquide (5).

Le liquide (5) est distribué entre chacun des modules (10), par exemple en parallèle, par une tuyauterie (113). Une pompe (109) crée une pression permettant de pousser le liquide à travers les modules.

Le circuit hydraulique est doté d'un ou plusieurs filtres (108) dessiccants et particulaires qui peuvent être placés avant la pompe ou avant les assemblages de cellules (20) pour les protéger.

Le circuit hydraulique comprend un échangeur (110) qui permet le refroidissement ou le réchauffage du liquide (5). Cet échangeur transfère la chaleur sur un fluide (111) pouvant être de l'air, de l'eau glycolée, un fluide réfrigérant, voire un fluide cryogénique pour les applications spatiales, ou bien un mélange de ces différents fluides en différents circuits. Cet échangeur (110) peut être placé à différents endroits sur le circuit : après la pompe et avant les assemblages de cellules (20) de préférence afin de réduire la pression hydraulique dans l'enceinte (104) de la batterie (100).

L'enceinte étanche (104) fait office de vase d'expansion permettant la dilation thermique du liquide car elle contient soit un gaz, par exemple de l'air, soit une membrane déformable.

Le circuit hydraulique comprend aussi une soupape de sécurité (105) permettant d'éviter la montée en pression du circuit en cas de défaillance par émission de gaz par la batterie. Cette soupape est placée sur l'enceinte étanche (104).

Un dispositif de remplissage (114) et un dispositif de purge (115) sont aussi placés sur l'enceinte. Le dispositif de remplissage (114) peut se présenter sous la forme d'un bouchon. Ce bouchon peut contenir un système de purge d'air, par exemple à flotteur, ou bien contenir un simple trou d'égalisation de pression équipé ou non de filtre à particule et dessiccant.

### Description détaillée d'un module (10) de batterie à cellules prismatiques

Les cellules prismatiques sont des pavés. Leur enveloppe extérieure est en aluminium, par opposition aux cellules en sachet (« pouch selon le terme anglais). Dans cette section, les figures illustrent un module de batterie à cellules prismatiques.

Sur les figures 5 et 6, le module (10) est composé d'un boîtier (12) en aluminium soudé ou extrudé. Une face avant (11) et une face arrière (17) ferment le boîtier (12). Sur la face avant (11) sont fixés des connecteurs étanches électriques de puissance (13) et de communication (16). Des ports hydrauliques d'entrée (14) et de sortie (15) de liquide (5) sont disposés respectivement en bas et en haut dans la face avant. Sur la face arrière, seule la soupape de sécurité (18) est positionnée.

Sur la [Fig.7], une vue éclatée du module (10) est présentée. On y voit l'assemblage de cellules (20) disposant de moyens de fixations mécaniques (78 et 79) sur la face avant (11) et sur la plaque-support (19) qui présente des perçages (80) permettant le guidage et l'arrêt en translation dans le plan normal aux tiges (79). Les cellules prismatiques sont disposées verticalement, leurs grandes faces en vis-à-vis dans des plans verticaux.

Un circuit électronique (34) permettant la mesure des tensions des cellules et la mesure de température est intégré dans le module (10). Un capot (35) isolant électrique permet d'empêcher le contact électrique entre l'assemblage de cellules (20) et l'enceinte (12). Un conduit hydraulique (22) en forme de baquet permet de collecter le liquide à proximité de la face interne supérieure de l'enceinte (12) pour le guider vers le port de sortie (15) de manière à collecter les bulles de gaz et limiter la hauteur d'un éventuel ciel gazeux dans le module.Dans le cadre de l'invention, le terme « baquet » désigne une cuvette fonctionnant en déversoir, ou trop-plein, pour l'évacuation d'un fluide, liquide ou gazeux, situé au-dessus des arêtes supérieures d'entrée de ladite cuvette. L'entrée de la soupape (18) sur la face arrière (17) possède une forme oblongue horizontalement de sorte à définir un niveau de liquide (5) le plus élevé possible dans le module (10) lorsqu'elle est ouverte.

Sur la [Fig.8], une vue éclatée de l'assemblage de cellules (20) est présentée. On y retrouve un ensemble de cellules (29). Des plaques avant (26) et arrières (27) permettent d'appliquer un effort de compression sur l'ensemble de cellules (29). Cet effort est maintenu par des bandes en acier (28) constituant un cerclage de l'ensemble des cellules.

Entre chaque cellule, sont insérées des entretoises (24) permettant de dégager un chemin pour l'écoulement du liquide (5), ainsi qu'un isolant thermique compressible (25) pour éviter la propagation de la combustion d'une cellule à l'autre en cas d'emballement thermique et permettant le gonflement des cellules prismatiques (29). L'ensemble de cellules (29) est réhaussé par des cales (23) qui libèrent un espace de circulation du liquide (5) sous le module (10). Le liquide (5) est guidé depuis le connecteur hydraulique d'entrée (14) par un conduit hydraulique (21) qui établit un flux de liquide (5) de faible vitesse sous l'ensemble de cellules (29).

Sur le dessus des cellules est placé un support (30) isolant électrique qui positionne les bus-barres (31) soudés sur les terminaux des cellules (29). Un circuit électronique flexible (33) est soudé sur les bus-barres et fixé mécaniquement au support (30). Ce circuit (33) permet les prises de tension et de température lues par la carte électronique (34). Un dernier bus-barre (32) est riveté, soudé ou vissé afin de faire la connexion électrique entre les deux rangées de cellules.

Sur les figures 9 et 10, est présenté l'agencement inter-cellule qui permet le refroidissement des grandes faces des cellules (70) prismatiques. Deux entretoises (71) délimitent des passages (74) pour le liquide (5). Entre les entretoises, un isolant thermique et électrique (72) permet d'éviter que les cellules (70) ne se touchent si elles viennent à gonfler et évite également que la chaleur d'une cellule ne soit majoritairement transférée sur la cellule adjacente en cas d'emballement thermique. Cet isolant (72) peut être fabriqué en plastique, en fibre de verre, en liège, ou en tout autre matériau compatible avec le liquide, qui garde ces propriétés thermique et mécaniques une fois immergé, qui résiste à des températures supérieures à 200°C et qui possède une conductivité thermique préférentiellement inférieure à 0.4 W/m/K. Son épaisseur est typiquement inférieure à 3mm. L'entretoise (71) possède une épaisseur équivalente au gonflement normal d'une cellule, soit typiquement de 7 à 8% de l'épaisseur de la cellule possédant une électrochimie de type Lithium ion NMC.

Une entretoise (71) est formée par cadre en matériau isolant électrique, typiquement un plastique (eg. PA6) sur lequel s'appuie la cellule et qui reprend l'effort de compression appliqué à l'ensemble de cellules (29). L'entretoise permet la communication du liquide (5) depuis le volume inférieur (73) jusqu'au volume supérieur (75). Un dispositif de pertes de charge est formé par des fentes (76) calibrées formant l'entrée de l'entretoise (71). La sortie hydraulique de l'entretoise (71) est formée par des fentes (77) plus larges générant sensiblement moins de pertes de charges qu'à l'entrée (76) de sorte à favoriser un effet de convection naturelle en cas de défaillance de la pompe (109) ou d'absence d'alimentation en liquide diélectrique (5). Cet effet est notamment recherché lors d'un emballement thermique pour répartir de la chaleur générée par la combustion d'une cellule sur l'ensemble du module et non seulement sur les cellules adjacentes.

Alternativement, une seule entretoise (71) peut être positionnée entre les cellules, sans présence de l'isolant (72). Son épaisseur est alors équivalente à 7 à 15% de l'épaisseur de la cellule possédant une électrochimie de type Lithium ion NMC.

Sur la [Fig.11], des variantes d'entretoises (71) montrent des renforts (81) permettant de reprendre l'effort de compression appliqué à l'ensemble de cellules (29) sur les grandes faces de celles-ci en plus du cadre de l'entretoise. Cela permet de répartir au mieux les contraintes internes aux cellules tout en permettant la circulation du liquide (5). La plage de contraintes internes acceptables par les cellules est typiquement inférieure à 1MPa et supérieur à 0.001MPa. Ces entretoises peuvent être compressibles dans leur épaisseur pour s'adapter au gonflement naturel des cellules grâce à un matériau compressible tout en gardant les contraintes internes dans la plage désirée. De plus, en cas d'emballement thermique d'une cellule, les renforts (81) évitent le contact thermique direct entre la cellule en feu et la cellule adjacente.

Sur la [Fig.12], le dispositif de maintien en compression est isolé de l'assemblage de cellules (20). Deux plaques avant (26) et arrière (27) appliquent un effort homogène sur toutes les surfaces. Cet effort est maintenu par un ensemble de bandes (28) en acier qui forment un cerclage autour de l'ensemble de cellules (29). Des moyens de fixation mécanique permettent un ancrage sur la plaque avant (26) grâce au vissage d'équerre (78) dans la face avant (11) et une liaison glissière dans la plaque-support (19) formées par les tiges (79) de la plaque arrière (27) qui viennent coulisser lors du montage dans les perçages (80).

### Description détaillée d'un module (10) à cellules cylindriques

Les cellules cylindriques sont des cylindres présentant une coque en aluminium.

Sur les figures 13 et 14, le module (10) est composé d'un bac (41) ainsi que d'un couvercle (42) formant une enceinte étanche au liquide (5). Ces pièces sont en aluminium ou en matériau composite. La face avant du bac (41) présente des connecteurs étanches électriques de puissance (44) et de communication (45) ainsi que des ports hydrauliques d'entrée (46) en bas et de sortie (47) en haut. Un renfort mécanique (43) permet d'éviter la déformation du couvercle sous l'effet de vibrations ou de la pression interne. La face arrière du bac (41) présente une soupape de sécurité (48) permettant l'évacuation de gaz ou de liquide (5) en cas de pression interne trop élevée.

La [Fig.15] montre une vue éclatée du module (10) à cellules cylindriques. Un assemblage de cellules (20) est contenu dans le bac (41) et le couvercle (42). Des bus-barres (51 et 52) connectent électriquement l'assemblage de cellules aux connecteurs électriques de puissance (44). Un circuit électronique (34) est intégré au module. Il communique via le connecteur électrique de communication (45) et est connecté à l'assemblage de cellules (20). Un conduit hydraulique (50) en forme de baquet permet de collecter le liquide (5) chaud à proximité de la face supérieure interne du module (10) et de le guider jusqu'à connecteur hydraulique de sortie (47). Des tiges de maintien (56) permettent la fixation mécanique de l'assemblage de cellule (20) dans le bac (41).

La [Fig.16] montre une vue éclatée de l'assemblage de cellule (20) et les figures 17 et 18 illustrent les écoulements de liquide (5) dans le module (10) et les détails de l'assemblage de cellules (20) permettant la circulation du liquide (5). Il est composé d'un ensemble de cellules cylindriques (59) enfermées dans un support de cellule formé par deux coques (57 et 58) dont la jointure est rendue étanche par un joint plat (60). Des bus-barres (62 et 61) sont soudées à chaque extrémité ainsi qu'un circuit électronique flexible (63 et 64) soudé aux bus-barres pour prendre la tension des cellules et présentant des thermistances brasées pour mesurer les températures. Deux plaques isolantes (53 et 54) ferment le support de cellule en définissant des volumes inférieur (65) et supérieur (66) dans lesquels circule le liquide (5). Un conduit hydraulique (49) alimente en liquide le volume inférieur (65). Un dispositif de perte de charge est formé par des orifices (67) présents dans les coques (57 et 58) qui laissent passer le liquide (5) et génèrent une perte de charge permettant la distribution uniforme du liquide sur toutes les cellules. Ces orifices (67) ont un diamètre typique entre 0.5mm et 2mm. Des trous sont ménagés dans les bus-barres (62 et 61) pour laisser le liquide (5) passer. Chaque cellule est entourée par plusieurs orifices, entre 3 et 6, totalisant une surface entre 1mm² et 12mm².

### Description détaillée d'une batterie modulaire intégrée dans un véhicule

La [Fig.19] montre une batterie divisée en 9 modules (10) reliés électriquement en série à une boite de jonction (102) par des bus-barres ainsi que par un faisceau électrique de communication qui transfert les informations mesurées par les cartes électroniques (34) selon un protocole CAN. Les modules et la boite de jonction sont refroidis par immersion et connectés à circuit hydraulique (113). Cette batterie se présente dans un châssis (117) plat formé de tubes aluminium creux fabriqués par extrusion et de profilés aluminium formé par moulage.

Les soupapes (18) de chacun des modules sont connectées au châssis (117) composés de tubes creux. En cas d'emballement thermique, les gaz générés par la combustion des cellules (dont un exemple de position est représentée par une étoile noire sur la figure) sont canalisés à l'intérieur des tubes creux du châssis (117) puis dirigés vers une sortie unique (118) (tel qu'illustré par les flèches noires sur la figure) pour être expulsés hors de la batterie sans se propager dans celle-ci. A cette sortie, un capteur (119) de température et de pression peut être positionné afin de détecter le déclenchement du feu de batterie. L'utilisation des tubes aluminium du châssis permet d'éviter l'utilisation d'une conduite supplémentaire et d'augmenter la compacité de la batterie. Les éventuelles traverses du châssis peuvent aussi être utilisées.

### Description détaillée d'un module (10) de batterie à cellules en sachet

Les cellules en sachet sont des cellules en forme de pavé dont l'enveloppe extérieure est en film plastique (on parle alors de cellules « pouch » selon le terme anglais).

Sur la [Fig.20], le module (10) est composé d'un boîtier (212) en aluminium soudé ou extrudé. Une face avant (211) et une face arrière (217) ferment le boîtier (212). Sur la face avant (211) sont fixés des connecteurs étanches électriques de puissance (213) et de communication (216). Des ports hydrauliques d'entrée (214) et de sortie (215) de liquide diélectrique (5) sont disposés respectivement en bas et en haut dans la face avant. Sur la face arrière, seule la soupape de sécurité (218) est positionnée.

Sur la [Fig.21], une vue éclatée du module (10) est présentée. On y voit l'assemblage de cellules (220). Les cellules prismatiques sont disposées verticalement, leurs grandes faces en vis-à-vis dans des plans verticaux. L'entrée de la soupape (218) sur la face arrière (217) est desservie par un conduit hydraulique (222) en forme de baquet de sorte à définir un niveau de liquide (5) le plus élevé possible dans le module (10) lorsque ladite soupape (218) est ouverte.

Sur la [Fig.22], une vue éclatée de l'assemblage de cellules (220) est présentée. On y retrouve un ensemble de cellules (229). Des plaques avant (226) et arrière permettent d'appliquer un effort de compression sur l'ensemble de cellules (229). Cet effort est maintenu par des bandes métalliques (228) constituant un cerclage de l'ensemble des cellules.

Entre chaque cellules (229), sont insérées alternativement des entretoises (224) permettant de dégager un chemin pour l'écoulement du liquide diélectrique (5), ou bien une mousse compressible isolante thermique (225) permettant le gonflement des cellules et évitant la propagation de la combustion d'une cellule à l'autre en cas d'emballement thermique. Les entretoises (224) et la mousse compressible isolante (225) évitent le contact thermique entre les cellules en cas d'emballement thermique et limitent ainsi sa propagation. L'ensemble de cellules (229) est contenu dans un support de cellules (223) qui définit un espace de circulation du liquide diélectrique (5) dessous et dessus les cellules (229). Le liquide diélectrique (5) est guidé depuis le connecteur hydraulique d'entrée (214) par un conduit hydraulique qui établit un flux de liquide (5) de faible vitesse sous l'ensemble de cellules (29). Puis il traverse un dispositif de pertes de charge (267), illustré en [Fig.23], constitué de trous disposés de sorte à équilibrer les débits de liquide entre les différentes entretoises (224) et sur la longueur d'une même entretoise. Le liquide diélectrique (5) traverse l'assemblage de cellules (229). Il est collecté par le support de cellules (223) en haut du module sans restriction de section afin de favoriser la convection naturelle, et est guidé vers le connecteur hydraulique de sortie (215).

La [Fig.24] présente les écoulements de liquide diélectrique (5), représentés par les flèches, au travers d'une entretoise (224), dans le module (10) fabriqué à partir de cellules en sachet (229). Le support de cellules (223) définit un volume inférieur (230) et un volume supérieur (231).

Sur les figures 25, une variante d'entretoise est illustrée. Il s'agit d'une tôle métallique corruguée formant grille (224), par exemple du type de celles utilisées comme turbulateurs dans certains échangeurs à plaques. Du fait de sa réalisation par pliage-découpe de rubans de tôle, ce type de grille (224) est économique à produire et présente un motif à créneaux décalés favorable à plusieurs égards :
- elle présente un treillis pour la circulation de fluide
- elle présente une surface sensiblement plane, non agressive vis-à-vis de la face des cellules avec lesquelles elle est mise en contact
- la grille comportant ce type de motif présente une surface cumulée de contact homogène et étendue, typiquement supérieure à 30%, et idéalement supérieure à 50% de la surface de la grande face des cellules, permettant reprendre les efforts de compression dus à la fabrication de l'assemblage de cellules sans provoquer de contraintes localisées
- en cas d'emballement thermique d'une cellule, le motif à créneaux décalés permet de mobiliser par convection naturelle tout le liquide diélectrique présent entre les cellules (contre une fraction seulement du liquide dans le cas d'une tôle ondulée continue par exemple).

La flèche donne le sens de circulation du liquide diélectrique (5) au travers de cette grille (224). Cette grille (224) permet de reprendre les efforts de compression dus à la fabrication de l'assemblage de cellules et dus au gonflement des cellules (229) tout en laissant passer le liquide (5).

Sur la [Fig.26], une variante de grille (224) est représentée en coupe transversale comprise entre les grandes faces (232) de deux cellules (229) et capable de se conformer à ces mêmes faces bombées (233) lorsque les cellules sont gonflées. Cette grille (224) peut présenter, par son épaisseur de tôle et un profil adapté de son motif de pliage, un taux de compressibilité qui permet de se conformer à la forme des cellules gonflées et de ne pas dépasser une valeur seuil d'effort de compression sur les cellules (229) en la contrôlant sur une plage de contraintes internes desdites cellules entre 0.001MPa et 1MPa. Un profil de pliage adapté à cette fonction est par exemple un profil 'en queue d'aronde' représenté [Fig.26], où l'une au moins des jambes du profil présente un angle aigu vis-à-vis de sa base (à la distinction de profils trapézoïdaux dont les jambes présentent un angle obtus par rapport à leur base).

L'angle aigu entre la jambe et sa base améliore la capacité du profil à être comprimé, et de ce fait permet à l'entretoise d'être conformée au contact de la cellule lorsque celle-ci gonfle. Typiquement, la souplesse recherchée doit être supérieure à 1mm par MPa. L'épaisseur de tôle utilisée pour réaliser la grille (224) est avantageusement inférieure à 0,2mm, idéalement inférieure à 0,1mm. Le matériau de la tôle est préférentiellement l'acier inoxydable, pour sa tenue en température et sa relativement faible conductivité thermique, apte à limiter le flux thermique de conduction vers les cellules adjacentes en cas d'emballement thermique.

### Description détaillée de la collecte de fluide

Les figures 27 et 28 représentent une vue respectivement de côté et de face du module selon l'invention. Le boîtier (12) présente sur sa face frontale avant (11) un conduit d'alimentation (122), plus large que haut, avec une section décroissante, débouchant dans le volume inférieur (65) et un conduit de sortie (22) en forme de baquet débouchant sur la face frontale arrière (17), dans la partie supérieure débouchant dans le volume supérieur (66).

L'utilisation d'un baquet (22) pour faire sortir un fluide du module, que ce soit le liquide de refroidissement (5) ou bien les gaz générés par un emballement thermique, permet de minimiser la distance verticale entre le haut des cellules et le couvercle du module. Cette distance est typiquement de quelques millimètres dans le cadre de l'invention. Par ailleurs, la sortie de fluide étant réalisée à l'horizontal, sur une face latérale du module, la hauteur totale d'un module, et donc de la batterie, est limitée, ce qui est avantageux en termes d'intégration véhicule.

La [Fig.29] représente une vue de face du module selon l'invention avec deux baquets (22, 122) et une soupape (120).

Il présente un premier baquet de collection du fluide de refroidissement échauffé (22) sur la face avant (11) et un second baquet (23) de collection des gaz en cas d'emballement thermique et leur acheminement vers un organe de sécurité, débouchant dans une soupape (120).

La [Fig.30] représente une vue de face d'une alternative du module avec un baquet (22) à double fonction disposé sur la face avant (11) et débouchant d'une part sur une soupape (120) et d'autre part sur une sortie de fluide échauffé.

En cas d'emballement thermique, les gaz générés engendrent une augmentation de la pression dans l'enceinte. Les gaz s'accumulent dans la partie la plus haute de l'enceinte, due à la différence de densité entre ces gaz et le liquide de refroidissement. Au-delà d'une pression prédéterminée, l'organe de sécurité (typiquement une soupape (120) ou un disque de rupture), permet d'évacuer via un baquet, un volume de gaz donné, permettant de conserver la pression sous le seuil mentionné. Le baquet permet ainsi de limiter le volume liquide poussé en-dehors de l'enceinte lors de l'ouverture de la soupape car il collecte les fluides à proximité du couvercle de l'enceinte. Un volume suffisant de liquide de refroidissement est ainsi conservé dans l'enceinte pour un refroidissement via une pompe t/ou par convection naturelle, entre le bas et le haut du module.

La [Fig.31] représente une vue de face du module selon l'invention avec un baquet situé au-dessus du conduit d'alimentation (122) et la [Fig.32] une vue éclaté du module selon cette variante.

Dans ce mode de réalisation particulier, le baquet fait partie d'un bloc de distribution fluidique (125). Le baquet (22) est situé en partie haute du bloc de distribution fluidique (125) et opère en déversoir pour collecter le fluide chaud dans la partie la plus haute de l'enceinte, au-dessus de l'arête du baquet (22), et le guider vers un port de sortie latéral du module situé en contre-bas de l'arête du baquet, permettant ainsi de limiter la hauteur totale du module.

De manière avantageuse, le bloc de distribution (125) comprend en partie basse un diffuseur de fluide pour guider le fluide de refroidissement refroidie à partir d'un port d'entrée latéral, vers le volume inférieur de l'enceinte. Une soupape de sécurité (126) est prévue sur la face arrière (17).

La [Fig.33] représente une vue éclatée en détail de la soupape du module selon l'invention et les figures 34 et 35 représentent des vues de face de la soupape respectivement en position passante et en position bloquante.

Dans un mode de réalisation particulier, la soupape de sécurité (120) est située en contre-bas d'un baquet (22, 23), fixée sur une face latérale (11) du module.

Ainsi, en cas de montée en pression de l'enceinte au-delà d'une pression prédéterminée, typiquement en conséquence d'un emballement thermique produisant des gaz, la soupape (120) permet l'évacuation d'un volume de fluide nécessaire à limiter l'augmentation de pression dans l'enceinte. Les gaz produits durant un emballement thermique vont s'accumuler en partie haute de l'enceinte formant un ciel gazeux. Une soupape placée sur le couvercle du module permettrait d'évacuer uniquement le gaz produit mais la hauteur totale du module serait alors augmentée. En positionnant la soupape sur une face latérale, la hauteur du module n'est pas impactée. Sans baquet, l'évacuation des gaz nécessiterait que le volume de fluide de refroidissement située au-dessus de la soupape dans le boîtier soit totalement évacué. L'utilisation d'un baquet permet de réduire le volume de fluide de refroidissement perdu lors d'une ouverture de soupape.

### Description détaillée d'un exemple de soupape

La soupape (120) est munie d'un ressort (127) pour plaquer le clapet (128) contre une surface antagoniste (129) afin de garantir son étanchéité en condition fermée. Les ressorts de compression hélicoïdaux occupent beaucoup d'espace dans la hauteur et rendraient la soupape trop encombrante. La soupape est ainsi avantageusement munie d'un ressort (128) de compression ondulé (en anglais « multi-wave » (par exemple décrit dans le brevet US4901987). Ce type de ressort est compact dans la hauteur.

La soupape (121) est avantageusement fixée sur une face latérale du module, au niveau du baquet, par un système de fixation à baïonnettes.

La [Fig.36] représente une vue schématique du module avec trois baquets et deux soupapes en position nominale et la [Fig.37] une vue schématique du module avec trois baquets et deux soupapes en position de retournement du module.

En cas d'emballement thermique, la pression interne du pack augmente jusqu'à déclenchement des soupapes (121, 131) indiqué par une flèche creuse sur les figures 36 et 37. Le niveau liquide s'établit à la hauteur du point d'évacuation de gaz le plus bas.

### Protection en cas de retournement du module

En cas de retournement complet du pack il est avantageux d'avoir un ou plusieurs baquets également en partie basse du pack (baquet 122). Ce baquet (122) « bas » devenant « haut » en cas de retournement complet ([Fig.37]).

Avantageusement, en cas de retournement complet du pack, les soupapes sont sélectivement rendues inactives par un dispositif gravitaire. Les dispositifs gravitaires peuvent prendre la forme de clapets à bille gravitaire (1211, 1311). Ces dispositifs gravitaires ferment les soupapes placées sur les baquets se retrouvant en partie basse du pack.

On évite ainsi, en cas d'emballement thermique d'un véhicule retourné, que le module soit complètement vidangé.

### Variantes de réalisation

La [Fig.38] représente une vue schématique du module avec deux baquets (22, 23) et une mousse fusible (145) et la [Fig.39] une vue schématique du module avec deux baquets (22, 23), une mousse fusible et une soupape. La mousse fusible peut-être par exemple une mousse de polystyrène expansé.

Selon une variante ([Fig.38]), une mousse fusible (145) occupe partiellement l'espace supérieur du module obstruant un premier baquet (23) associé fluidiquement à un conduit de sortie des gaz d'emballement thermique (123), la mousse résistant donc à la pression interne du module. Cette mousse fusible va se dégrader thermiquement (gazéification) lors d'un emballement thermique de manière à libérer un canal d'évacuation jusqu'au conduit de sortie (123).

Selon une variante préférée ([Fig.39]), la mousse (145) peut conduire à un dispositif d'évacuation tel une soupape ou un disque de rupture via un baquet (23) obstrué par ladite mousse fusible (145).

## Revendications

1. Module (10) de batterie électrique comprenant un boîtier (2, 12) dans lequel sont disposés une pluralité de cellules (1, 29, 59, 70, 229) en échange thermique direct avec un liquide de refroidissement diélectrique (5) circulant entre des interstices formés entre lesdites cellules (1, 29, 59, 70, 229) adjacentes, **caractérisé en ce que** ledit boîtier (2, 12) présente :
• un volume intermédiaire (150) dans lequel lesdites cellules (1, 29, 59, 70, 229) adjacentes sont disposées et entre lesquelles s'écoule ledit liquide diélectrique (5),
• un volume inférieur (65, 73, 130, 230) situé en-dessous dudit volume intermédiaire (150), et alimenté par au moins un port d'entrée (3, 14, 46) de liquide diélectrique (5),
• un volume supérieur (66, 75, 140, 231), situé au-dessus dudit volume intermédiaire (150), et débouchant vers l'extérieur dudit boîtier par au moins un port de sortie (4, 15, 47) de liquide diélectrique (5),
• et **en ce qu'**il présente au moins un conduit hydraulique (22, 50) en forme de baquet qui collecte les gaz émis en cas d'emballement thermique dans le volume supérieur (66, 75, 140, 231) à proximité de la face interne supérieure de l'enceinte (12, 42) pour les guider vers la soupape de sécurité et/ou qui collecte ledit liquide diélectrique (5) dudit volume supérieur (66, 75, 140, 231) à proximité de la face interne supérieure de l'enceinte (12, 42) pour le guider vers ledit port de sortie (4, 15, 47).

2. Module (10) de batterie électrique selon la revendication précédente **caractérisé en ce qu'**il comporte une soupape de sécurité (121) associé fluidiquement audit baquet de collecte (22).

3. Module (10) de batterie électrique selon la revendication précédente **caractérisé en ce qu'**il comporte un premier baquet de collection du fluide de refroidissement échauffé (22) et un second baquet (23) de collection des gaz en cas d'emballement thermique et leur acheminement vers un organe de sécurité, débouchant dans une soupape (120).

4. Module (10) de batterie électrique selon la revendication 1, 2 ou 3 **caractérisé en ce que** ledit module comporte en outre un dispositif (6, 67, 76, 267) créant une perte de charge supérieure aux autres pertes de charge subies par le liquide lors de la traversée du module (10) entre la ou les zones les plus proches dudit au moins un port (3) d'entrée de liquide diélectrique (5), et la ou les zones opposées dudit volume inférieure (65, 73, 130, 230) ; ledit dispositif (6, 67, 76, 267) de pertes de charge étant disposé entre ledit volume inférieur (65, 73, 130, 230) et ledit volume intermédiaire (150).

5. Module (10) de batterie électrique selon la revendication précédente **caractérisé en ce que** ledit dispositif de perte de charge (6) est constitué par une paroi perforée.

6. Module (10) de batterie électrique selon la revendication 4 **caractérisé en ce que** ledit dispositif de perte de charge (6) est composé par un assemblage de pièces étanches entre elles et présentant des orifices, ou des fentes, calibrés, laissant passer le liquide de refroidissement, en créant localement, une dissipation, par frottements, de l'énergie mécanique du liquide de refroidissement traversant le dispositif, et une baisse de pression variant en fonction de la distance par rapport au port d'entrée (3) du liquide de refroidissement.

7. Module (10) de batterie électrique selon la revendication 1 **caractérisé en ce que** la perte de charge entre ledit volume intermédiaire (150) et ledit volume supérieur (66, 75, 140, 231) soit sensiblement plus faible qu'entre ledit volume inférieur (65, 73, 130, 230) et ledit volume intermédiaire (150) de sorte à favoriser la convection naturelle en cas d'absence d'alimentation de liquide diélectrique (5) par ledit au moins un port d'entrée (3, 14, 46)

8. Module (10) de batterie électrique selon la revendication 4 **caractérisé en ce que** ledit dispositif de pertes de charge (6, 67, 76, 267) est constitué d'orifices entre 0.3mm² et 2.3mm² de section chacun.

9. Module (10) de batterie électrique selon la revendication 1 **caractérisé en ce que** lesdites cellules (1, 29, 70, 229) sont de type prismatique ou en sachet et sont disposées verticalement dans ledit volume intermédiaire (150).

10. Module (10) de batterie électrique selon la revendication 1 **caractérisé en ce que** des entretoises (24, 71, 224) sont intercalées entre deux cellules (1, 29, 70, 229) adjacentes.

11. Module (10) de batterie électrique selon la revendication précédente **caractérisé en ce que** lesdites entretoises (24, 71, 224) forment un treillis de reprise de l'effort de compression appliqué à l'ensemble de cellules (1, 29, 70, 229) sur les grandes faces de celles-ci.

12. Module (10) de batterie électrique selon la revendication 10 ou 11 **caractérisé en ce que** lesdites entretoises (24, 71, 224) présentent une souplesse dans leur épaisseur supérieure à 1 mm par MPa.

13. Module (10) de batterie électrique selon la revendication 10 **caractérisé en ce que** lesdites entretoises (24, 71, 224) possèdent des mailles inférieures à 30% de la longueur desdites cellules (1, 29, 70, 229).

14. Module (10) de batterie électrique selon la revendication 10 **caractérisé en ce que** lesdites entretoises (24, 71, 224) :
• sont formées par un cadre isolant électrique découpé d'une épaisseur comprise entre 7 et 15% de l'épaisseur des cellules (1, 29 70, 229),
• présentent des fentes inférieures (76) permettant une perte de charge,
• présentent des fentes supérieures (77) sensiblement plus large que lesdites fentes inférieures,
• présentent des renforts (81) configurés pour éviter le contact thermique direct entre cellules,
• soient fabriquées en matériau compressible présentant une souplesse supérieure à 1mm par MPa,
• et présentent une fenêtre (74) de circulation du liquide (5) depuis un volume inférieur (73, 130, 230) jusqu'à un volume supérieur (75, 140, 231).

15. Module (10) de batterie électrique selon la revendication 10 **caractérisé en ce que** lesdites entretoises (24, 71, 224) sont des grilles obtenues par pliage-découpe selon un motif à créneaux décalés, d'une tôle métallique d'épaisseur inférieure à 0,2mm.

16. Module (10) de batterie électrique selon la revendication 10 **caractérisé en ce que** lesdites entretoises (24, 71, 224) :
• sont formées par une grille (224) d'une épaisseur comprise entre 7 et 15% de l'épaisseur des cellules (1, 29 70, 229)
• présentent une surface de contact avec les cellules supérieure à 30% de la surface de la grande face desdites cellules
• permettent la circulation du liquide (5) depuis un volume inférieur (73, 130, 230) jusqu'à un volume supérieur (75, 140, 231)

17. Module (10) de batterie électrique selon la revendication précédente **caractérisé en ce que** lesdites entretoises (24, 71, 224) :
• présentent une surface de contact avec les cellules supérieure à 50% de la surface de la grande face desdites cellules,
• comportent un motif de pliage 'en queue d'aronde' conférant à la grille (224) une compressibilité permettant de se conformer au gonflement desdites cellules (1, 29 70, 229),
• sont formées à partir d'une tôle en acier inoxydable d'épaisseur inférieure à 0.1mm.

18. Module (10) de batterie électrique selon la revendication 1 ou 2 **caractérisé en ce que** lesdites cellules (1, 59) sont de forme cylindrique et sont disposées verticalement dans ledit volume intermédiaire (150).

19. Module (10) de batterie électrique selon la revendication précédente **caractérisé en ce que** ledit dispositif de pertes de charge (6, 67) est constitués d'orifices répartis en périphérie de chacune desdites cellules cylindriques, dans chacune des deux coques (57 et 58) du support de cellules et représente entre 1mm² et 12mm² autour de chacune desdites cellules cylindriques.

20. Batterie électrique **caractérisée en ce qu'**elle comprend une pluralité de modules (10) de batterie présentant les caractéristiques à la revendication 1 et **en ce qu'**ils sont étanches, lesdits modules présentant chacun une soupape de sécurité (18) connectée à un tube creux du châssis (117) de sorte que les gaz émis lors d'un emballement thermique soient dirigés à l'intérieur dudit châssis et expulsés hors de ladite batterie sans se propager dans celle-ci.

## Patentansprüche

1. Elektrisches Batteriemodul (10), umfassend ein Gehäuse (2, 12), in dem eine Vielzahl von Zellen (1, 29, 59, 70, 229) in direktem Wärmeaustausch mit einer dielektrischen Kühlflüssigkeit (5) angeordnet ist, die zwischen Zwischenräumen zirkuliert, die zwischen den benachbarten Zellen (1, 29, 59, 70, 229) ausgebildet sind, **dadurch gekennzeichnet, dass** das Gehäuse (2, 12) aufweist:
• ein Zwischenvolumen (150), in dem die benachbarten Zellen (1, 29, 59, 70, 229) angeordnet sind und zwischen denen die dielektrische Flüssigkeit (5) strömt,
• ein unteres Volumen (65, 73, 130, 230), das unterhalb des Zwischenvolumens (150) angeordnet ist und durch mindestens einen Einlassanschluss (3, 14, 46) für dielektrische Flüssigkeit (5) gespeist wird,
• ein oberes Volumen (66, 75, 140, 231), das oberhalb des Zwischenvolumens (150) angeordnet ist und durch mindestens einen Auslassanschluss (4, 15, 47) für dielektrische Flüssigkeit (5) in die Außenseite des Gehäuses mündet,
• und dadurch, dass es mindestens eine wannenförmige hydraulische Leitung (22, 50) aufweist, welche die im Falle eines thermischen Durchgehens in dem oberen Volumen (66, 75, 140, 231) in der Nähe der oberen Innenseite der Umschließung (12, 42) emittierten Gase sammelt, um sie zu dem Sicherheitsventil zu leiten, und/oder welche die dielektrische Flüssigkeit (5) aus dem oberen Volumen (66, 75, 140, 231) in der Nähe der oberen Innenseite der Umschließung (12, 42) sammelt, um sie zu dem Auslassanschluss (4, 15, 47) zu leiten.

2. Elektrisches Batteriemodul (10) nach dem vorstehenden Anspruch,
**dadurch gekennzeichnet, dass** es ein Sicherheitsventil (121) umfasst, das fluidisch mit der Auffangwanne (22) verbunden ist.

3. Elektrisches Batteriemodul (10) nach dem vorstehenden Anspruch,
**dadurch gekennzeichnet, dass** es eine erste Auffangwanne für das erwärmte Kühlfluid (22) und eine zweite Auffangwanne (23) für Gase im Falle eines thermischen Durchgehens und zu deren Weiterleitung zu einem Sicherheitselement umfasst, die in ein Ventil (120) münden.

4. Elektrisches Batteriemodul (10) nach Anspruch 1, 2 oder 3,
**dadurch gekennzeichnet, dass** das Modul ferner eine Vorrichtung (6, 67, 76, 267) umfasst, die einen Druckverlust erzeugt, der größer ist als die anderen Druckverluste, welche die Flüssigkeit beim Durchströmen des Moduls (10) zwischen dem oder den Bereichen, die dem mindestens einen Einlassanschluss (3) für dielektrische Flüssigkeit (5) am nächsten liegen, und dem oder den gegenüberliegenden Bereichen des unteren Volumens (65, 73, 130, 230) erfährt; wobei die Druckverlustvorrichtung (6, 67, 76, 267) zwischen dem unteren Volumen (65, 73, 130, 230) und dem Zwischenvolumen (150) angeordnet ist.

5. Elektrisches Batteriemodul (10) nach dem vorstehenden Anspruch,
**dadurch gekennzeichnet, dass** die Druckverlustvorrichtung (6) durch eine perforierte Wand gebildet ist.

6. Elektrisches Batteriemodul (10) nach Anspruch 4,
**dadurch gekennzeichnet, dass** die Druckverlustvorrichtung (6) aus einer Anordnung von miteinander abgedichteten Teilen besteht und kalibrierte Öffnungen oder Schlitze aufweist, die das Kühlmittel durchlassen, wobei lokal durch Reibungen eine Dissipation der mechanischen Energie des die Vorrichtung durchströmenden Kühlmittels und ein Druckabfall erzeugt werden, der in Abhängigkeit von dem Abstand zu dem Einlassanschluss (3) des Kühlmittels variiert.

7. Elektrisches Batteriemodul (10) nach Anspruch 1,
**dadurch gekennzeichnet, dass** der Druckverlust zwischen dem Zwischenvolumen (150) und dem oberen Volumen (66, 75, 140, 231) im Wesentlichen geringer ist als zwischen dem unteren Volumen (65, 73, 130, 230) und dem Zwischenvolumen (150), um die natürliche Konvektion im Falle eines Ausbleibens der Zufuhr von dielektrischer Flüssigkeit (5) durch den mindestens einen Einlassanschluss (3, 14, 46) zu begünstigen.

8. Elektrisches Batteriemodul (10) nach Anspruch 4,
**dadurch gekennzeichnet, dass** die Druckverlustvorrichtung (6, 67, 76, 267) aus Öffnungen mit einem Querschnitt von jeweils zwischen 0,3 mm² und 2,3 mm² besteht.

9. Elektrisches Batteriemodul (10) nach Anspruch 1,
**dadurch gekennzeichnet, dass** die Zellen (1, 29, 70, 229) vom prismatischen oder Pouch-Typ sind und vertikal in dem Zwischenvolumen (150) angeordnet sind.

10. Elektrisches Batteriemodul (10) nach Anspruch 1,
**dadurch gekennzeichnet, dass** Abstandshalter (24, 71, 224) zwischen zwei benachbarten Zellen (1, 29, 70, 229) eingefügt sind.

11. Elektrisches Batteriemodul (10) nach dem vorstehenden Anspruch,
**dadurch gekennzeichnet, dass** die Abstandshalter (24, 71, 224) ein Gitter für die Aufnahme der auf die Zellenanordnung (1, 29, 70, 229) auf deren großen Seiten ausgeübten Druckkraft bilden.

12. Elektrisches Batteriemodul (10) nach Anspruch 10 oder 11,
**dadurch gekennzeichnet, dass** die Abstandshalter (24, 71, 224) in ihrer Dicke eine Nachgiebigkeit von mehr als 1 mm pro MPa aufweisen.

13. Elektrisches Batteriemodul (10) nach Anspruch 10,
**dadurch gekennzeichnet, dass** die Abstandshalter (24, 71, 224) Maschen von weniger als 30 % der Länge der Zellen (1, 29, 70, 229) aufweisen.

14. Elektrisches Batteriemodul (10) nach Anspruch 10,
**dadurch gekennzeichnet, dass** die Abstandshalter (24, 71, 224):
• durch einen ausgeschnittenen elektrisch isolierenden Rahmen mit einer Dicke zwischen 7 und 15 % der Dicke der Zellen (1, 29, 70, 229) gebildet sind,
• untere Schlitze (76) aufweisen, die einen Druckverlust ermöglichen,
• obere Schlitze (77) aufweisen, die im Wesentlichen breiter als die unteren Schlitze sind,
• Verstärkungen (81) aufweisen, die konfiguriert sind, um einen direkten thermischen Kontakt zwischen Zellen zu vermeiden,
• aus kompressiblem Material hergestellt sind, das eine Nachgiebigkeit von mehr als 1 mm pro MPa aufweist,
• und ein Fenster (74) für die Zirkulation der Flüssigkeit (5) von einem unteren Volumen (73, 130, 230) zu einem oberen Volumen (75, 140, 231) aufweisen.

15. Elektrisches Batteriemodul (10) nach Anspruch 10,
**dadurch gekennzeichnet, dass** die Abstandshalter (24, 71, 224) Gitter sind, die durch Biegen und Schneiden eines Metallblechs mit einer Dicke von weniger als 0,2 mm gemäß einem versetzten Zinnenmuster erhalten werden.

16. Elektrisches Batteriemodul (10) nach Anspruch 10,
**dadurch gekennzeichnet, dass** die Abstandshalter (24, 71, 224):
• durch ein Gitter (224) mit einer Dicke zwischen 7 und 15 % der Dicke der Zellen (1, 29, 70, 229) gebildet sind
• eine Kontaktoberfläche mit den Zellen von mehr als 30 % der Oberfläche der großen Seite der Zellen aufweisen
• die Zirkulation der Flüssigkeit (5) von einem unteren Volumen (73, 130, 230) zu einem oberen Volumen (75, 140, 231) ermöglichen

17. Elektrisches Batteriemodul (10) nach dem vorstehenden Anspruch,
**dadurch gekennzeichnet, dass** die Abstandshalter (24, 71, 224):
• eine Kontaktoberfläche mit den Zellen von mehr als 50 % der Oberfläche der großen Seite der Zellen aufweisen,
• ein , schwalbenschwanzförmiges' Faltmuster aufweisen, das dem Gitter (224) eine Kompressibilität verleiht, die eine Anpassung an das Anschwellen der Zellen (1, 29, 70, 229) ermöglicht,
• aus einem Blech aus rostfreiem Stahl mit einer Dicke von weniger als 0,1 mm gebildet sind.

18. Elektrisches Batteriemodul (10) nach Anspruch 1 oder 2,
**dadurch gekennzeichnet, dass** die Zellen (1, 59) zylindrisch geformt sind und vertikal in dem Zwischenvolumen (150) angeordnet sind.

19. Elektrisches Batteriemodul (10) nach dem vorstehenden Anspruch,
**dadurch gekennzeichnet, dass** die Druckverlustvorrichtung (6, 67) aus Öffnungen besteht, die an dem Umfang jeder der zylindrischen Zellen in jeder der beiden Schalen (57 und 58) des Zellenträgers verteilt sind, und zwischen 1 mm² und 12 mm² um jede der zylindrischen Zellen herum ausweist.

20. Elektrische Batterie, **dadurch gekennzeichnet, dass** sie eine Vielzahl von Batteriemodulen (10) umfasst, welche die Merkmale nach Anspruch 1 aufweisen, und dass sie dicht sind, wobei die Module jeweils ein Sicherheitsventil (18) aufweisen, das mit einem Hohlprofil des Rahmens (117) verbunden ist, sodass die bei einem thermischen Durchgehen freigesetzten Gase in das Innere des Rahmens geleitet und aus der Batterie ausgestoßen werden, ohne sich in dieser auszubreiten.

## Claims

1. Electric battery module (10) comprising a housing (2, 12) in which a plurality of cells (1, 29, 59, 70, 229) are arranged in direct heat exchange with a dielectric cooling liquid (5) circulating between gaps formed between said adjacent cells (1, 29, 59, 70, 229), **characterized in that** said housing (2, 12) has:
• an intermediate space (150) in which said adjacent cells (1, 29, 59, 70, 229) are arranged and between which adjacent cells said dielectric liquid (5) flows,
• a lower space (65, 73, 130, 230) located below said intermediate space (150) and supplied with dielectric liquid (5) through at least one inlet port (3, 14, 46),
• an upper space (66, 75, 140, 231) located above said intermediate space (150), and opening to the outside of said housing through at least one outlet port (4, 15, 47) for dielectric liquid (5),
• and **in that** the housing has at least one hydraulic pipe (22, 50), in the shape of a bucket, which collects the gases emitted in the case of thermal runaway in the upper space (66, 75, 140, 231) in the vicinity of the upper inner face of the chamber (12, 42) in order to direct the gases toward the safety valve and/or which collects said dielectric liquid (5) from said upper space (66, 75, 140, 231) in the vicinity of the upper inner face of the chamber (12, 42) in order to direct the dielectric liquid toward said outlet port (4, 15, 47).

2. Electric battery module (10) according to the preceding claim,
**characterized in that** it comprises a safety valve (121) fluidically connected to said collecting bucket (22).

3. Electric battery module (10) according to the preceding claim,
**characterized in that** it comprises a first bucket (22) for collecting heated coolant and a second bucket (23) for collecting gases in the case of thermal runaway and for conveying them to a safety device, which buckets open into a valve (120).

4. Electric battery module (10) according to claim 1, 2, or 3,
**characterized in that** said module further comprises a device (6, 67, 76, 267) which creates a head loss greater than other head losses sustained by the liquid as it goes across the module (10) between the zone(s) closest to said at least one inlet port (3) for the dielectric liquid (5), and the zone(s) opposite said lower space (65, 73, 130, 230); said head loss device (6, 67, 76, 267) being arranged between said lower space (65, 73, 130, 230) and said intermediate space (150).

5. Electric battery module (10) according to the preceding claim,
**characterized in that** said head loss device (6) consists of a perforated wall.

6. Electric battery module (10) according to claim 4, **characterized in that** said head loss device (6) consists of an assembly of parts which are sealed between one another and which have calibrated orifices or slits allowing the cooling liquid to pass through, thereby creating, locally, a dissipation, through friction, of the mechanical energy of the cooling liquid passing through the device, and a pressure drop varying depending on the distance with respect to the cooling liquid inlet port (3).

7. Electric battery module (10) according to claim 1, **characterized in that** the head loss between said intermediate space (150) and said upper space (66, 75, 140, 231) is substantially lower than between said lower space (65, 73, 130, 230) and said intermediate space (150), so as to promote natural convection in the absence of supply of dielectric liquid (5) through said at least one inlet port (3, 14, 46).

8. Electric battery module (10) according to claim 4, **characterized in that** said head loss device (6, 67, 76, 267) consists of orifices each having a cross section between 0.3 mm² and 2.3 mm².

9. Electric battery module (10) according to claim 1, **characterized in that** said cells (1, 29, 70, 229) are prismatic-like or pouch-like and are arranged vertically in said intermediate space (150).

10. Electric battery module (10) according to claim 1, **characterized in that** spacers (24, 71, 224) are inserted between two adjacent cells (1, 29, 70, 229).

11. Electric battery module (10) according to the preceding claim,
**characterized in that** said spacers (24, 71, 224) form a lattice for absorbing the compressive force applied to the assembly of cells (1, 29, 70, 229) on the large faces thereof.

12. Electric battery module (10) according to claim 10 or 11,
**characterized in that** said spacers (24, 71, 224) have a flexibility in the thickness thereof of greater than 1 mm per MPa.

13. Electric battery module (10) according to claim 10, **characterized in that** said spacers (24, 71, 224) have meshes less than 30% of the length of said cells (1, 29, 70, 229).

14. Electric battery module (10) according to claim 10, **characterized in that** said spacers (24, 71, 224):
• are formed by a cut, electrically insulating frame having a thickness of between 7 and 15% of the thickness of the cells (1, 29, 70, 229),
• have lower slits (76) allowing a head loss,
• have upper slits (77) which are substantially wider than the lower slits,
• have reinforcements (81) designed to prevent direct thermal contact between cells,
• are manufactured from compressible material having a flexibility of greater than 1 mm per MPa,
• and have a window (74) for circulation of the liquid (5) from a lower space (73, 130, 230) to an upper space (75, 140, 231).

15. Electric battery module (10) according to claim 10, **characterized in that** said spacers (24, 71, 224) are grids obtained by bending and cutting a metal sheet having a thickness of less than 0.2 mm in a pattern of staggered indentations.

16. Electric battery module (10) according to claim 10, **characterized in that** said spacers (24, 71, 224):
• are formed by a grid (224) having a thickness of between 7 and 15% of the thickness of the cells (1, 29, 70, 229)
• have a surface area of contact with the cells which is greater than 30% of the surface area of the large face of said cells
• allow the liquid (5) to circulate from a lower space (73, 130, 230) to an upper space (75, 140, 231).

17. Electric battery module (10) according to the preceding claim,
**characterized in that** said spacers (24, 71, 224):
• have a surface area of contact with the cells which is greater than 50% of the surface area of the large face of said cells,
• comprise a 'dovetail' bending pattern which gives the grid (224) a compressibility allowing it to conform to the expansion of said cells (1, 29, 70, 229),
• are formed from a sheet of stainless steel having a thickness of less than 0.1 mm.

18. Electric battery module (10) according to claim 1 or 2,
**characterized in that** said cells (1, 59) are cylindrical and are arranged vertically in said intermediate space (150).

19. Electric battery module (10) according to the preceding claim,
**characterized in that** said head loss device (6, 67) consists of orifices distributed around the periphery of each of said cylindrical cells, in each of two shells (57 and 58) of a cell bracket, and is between 1 mm² and 12 mm² around each of said cylindrical cells.

20. Electric battery **characterized in that** it comprises a plurality of battery modules (10) having the characteristics of claim 1 and **in that** they are sealed, said modules each having a safety valve (18) connected to a hollow tube of the frame (117) so that the gases emitted during a thermal runaway are directed inside said frame and expelled outside said battery without spreading therein.
